# EUROPEAN PATENT APPLICATION

(11) **EP 2 874 370 A1**
(43) Date of publication of application: **20.05.2015**
(21) Application number: 12882105.5
(22) Date of filing: 31.07.2012
(51) Int. Cl.: H04L 29/08, H04L 29/12, H04N 5/445

(54) **ADVERTISEMENT STORAGE METHOD, AND ADVERTISEMENT INSERTION METHOD, APPARATUS AND SYSTEM**

(71) Applicant: Huawei Technologies Co., Ltd., Longgang District Shenzhen, Guangdong 518129 (CN)
(72) Inventor: XIONG, Chunshan, Shenzhen City Guangdong 518129 (CN); DU, Gaoke, Shenzhen City Guangdong 518129 (CN)
(74) Representative: Maiwald Patentanwalts GmbH
(86) International application number: PCT/CN2012/079420
(87) International publication number: WO 2014/019134

(57) **Abstract**

Embodiments of the present invention relate to the field of mobile communications and provide an advertisement storage method and advertisement insertion method, device, and system; the advertisement insertion system includes an advertisement providing device, an advertisement policy and charging control function, an advertisement storage, an advertisement insertion device, and a terminal, where the components are connected through a wireless network or a wired network. In the present invention, processes of automatically receiving, storing, and inserting an advertisement can be achieved by the advertisement insertion system including the advertisement policy and charging control function, the advertisement storage, the advertisement insertion device, and the terminal without any manual intervention by a service provider. Compared with the prior art in which an advertisement storing process and a process of setting an advertisement in an administered server are completed by using a lot of manual labor resources and time resources, not only manual labor resources and time resources can be saved, but also advertisement insertion efficiency can be significantly improved.

## Description

### TECHNICAL FIELD

The present invention relates to the field of mobile communications, and in particular, to an advertisement storage method and advertisement insertion method, device, and system.

### BACKGROUND

With the development of wireless communications technologies, mobile terminals such as smart phones, tablet computers, and e-book readers, can access the Internet easily. When a mobile terminal is accessing the Internet, the mobile terminal first needs to access a wireless network, and then accesses the Internet via the wireless network. In this case, the wireless network plays a role of a bridge between the mobile terminal and the Internet.

Insertion of an advertisement into data accessed by a mobile terminal includes the following steps: First, an advertisement provider provides advertisement content for a service provider in the Internet by using a communication tool such as an email or an instant messaging program; second, operation and maintenance personnel belonging to the service provider store and set advertisement content that satisfies a condition in an administered server; then, the mobile terminal initiates a data acquisition request to the server via a wireless network, where requested data may be a web page, a picture, video, an email, and so on; and finally, the server inserts the advertisement content into the data requested by the mobile terminal, and feeds back the data to the mobile terminal.

During the foregoing process, it takes a lot of manual labor resources and time resources to complete the process from providing the advertisement content for the service provider in the Internet by the advertisement provider to storing and setting the advertisement content in the administered server by the operation and maintenance personnel belonging to the service provider. The entire process is time-consuming, and mainly relies on manual labor.

### SUMMARY

In order to solve a problem that an existing advertisement insertion method is time-consuming and mainly relies on manual labor, embodiments of the present invention provide an advertisement storage method and advertisement insertion method and device. Technical solutions are as follows:

In a first aspect, an advertisement storage method is provided, where the method includes:
receiving identification information which is of advertisement content and is sent by an advertisement providing device;
receiving description information which is of the advertisement content and is sent by the advertisement providing device, where the description information of the advertisement content includes at least size information of the advertisement content; and
if the description information of the advertisement content satisfies a preset condition, sending a space allocation indication carrying the identification information and the size information of the advertisement content to an advertisement storage, so that the advertisement storage allocates a corresponding storage space to the advertisement content according to the identification information and the size information of the advertisement content, and that the advertisement storage requests the advertisement content from the advertisement providing device according to the identification information of the advertisement content and stores the advertisement content in the storage space; or, if the description information of the advertisement content satisfies a preset condition, sending a space allocation indication carrying the identification information and the size information of the advertisement content to an advertisement storage, so that the advertisement storage allocates a corresponding storage space to the advertisement content according to the identification information and the size information of the advertisement content, generates identification information of the storage space, and sends the identification information of the storage space to the advertisement providing device, so as to receive the advertisement content pushed according to the identification information of the storage space by the advertisement providing device to the storage space, and store the advertisement content.

In a second aspect, an advertisement storage method is provided, where the method includes:
receiving a space allocation indication carrying identification information and size information of advertisement content;
allocating a corresponding storage space to the advertisement content according to the identification information and the size information of the advertisement content; and
requesting the advertisement content from an advertisement providing device according to the identification information of the advertisement content, receiving the advertisement content and storing the advertisement content in the storage space; or, generating identification information of the storage space and providing the identification information of the storage space for an advertisement providing device, so that the advertisement providing device pushes the advertisement content to the storage space according to the identification information of the storage space; and receiving and storing the advertisement content.

In a third aspect, an advertisement insertion method is provided, where the method includes:
receiving placement requirement information of advertisement content and identification information of a storage space corresponding to the advertisement content which are sent by an advertisement policy and charging control function, where the placement requirement information includes one or more items of a matching keyword, a placement area, placement object information, a placement time segment, and a matching trigger event;
if attribute information of data to be fed back to a user satisfies one or more items of the matching keyword, the placement area, the placement object information, and the placement time segment in the placement requirement information, inserting the advertisement content into the data, where the advertisement content is advertisement content requested in advance or in real time from an advertisement storage according to the identification information of the storage space; and
if a trigger event collected by a terminal is the same as the matching trigger event in the placement requirement information, playing the advertisement content on a screen of the terminal.

In a fourth aspect, an advertisement policy and charging control function is provided and includes:
an advertisement identification receiving module, configured to receive identification information which is of advertisement content and is sent by an advertisement providing device;
a description information receiving module, configured to receive description information which is of the advertisement content and is sent by the advertisement providing device, where the description information of the advertisement content includes at least size information of the advertisement content;
a preset condition determining module, configured to determine that the description information received by the description information receiving module satisfies a preset condition; and
an allocation indication sending module, configured to, if the preset condition determining module determines that the description information of the advertisement content satisfies the preset condition, send, to an advertisement storage, a space allocation indication carrying the identification information which is of the advertisement content and is received by the advertisement identification receiving module and the size information which is of the advertisement content and is received by the description information receiving module, so that the advertisement storage allocates a corresponding storage space to the advertisement content according to the identification information and the size information of the advertisement content, and that the advertisement storage requests the advertisement content from the advertisement providing device according to the identification information of the advertisement content and stores the advertisement content in the storage space; or configured to, if the preset condition determining module determines that the description information of the advertisement content satisfies the preset condition, send, to an advertisement storage, a space allocation indication carrying the identification information which is of the advertisement content and is received by the advertisement identification receiving module and the size information which is of the advertisement content and is received by the description information, so that the advertisement storage allocates a corresponding storage space to the advertisement content according to the identification information and the size information of the advertisement content, generates identification information of the storage space, and sends the identification information of the storage space to the advertisement providing device, so as to receive the advertisement content pushed according to the identification information of the storage space by the advertisement providing device to the storage space, and store the advertisement content.

In a fifth aspect, an advertisement storage is provided and includes an allocation indication receiving module, a storage space allocating module, and one of an active advertisement acquiring module and a passive advertisement acquiring module, where
the allocation indication receiving module is configured to receive a space allocation indication carrying identification information and size information of advertisement content, where the space allocation indication is sent by an advertisement policy and charging control function when information included in description information of the advertisement content satisfies a preset condition, and the description information of the advertisement content includes at least the size information of the advertisement content;
the storage space allocating module is configured to allocate a corresponding storage space to the advertisement content according to the identification information and the size information which are of the advertisement content and are received by the allocation indication receiving module;
the active advertisement acquiring module is configured to request the advertisement content from an advertisement providing device according to the identification information which is of the advertisement content and is received by the allocation indication receiving module, receive the advertisement content and store the advertisement content in the storage space; and
the passive advertisement acquiring module is configured to generate identification information of the storage space allocated by the storage space allocating module and provide the identification information of the storage space for the advertisement providing device, so that the advertisement providing device pushes the advertisement content to the storage space according to the identification information of the storage space; and receive and store the advertisement content.

In a sixth aspect, an advertisement insertion device is provided, is used in a network element device via which a terminal accesses the Internet, and includes:
a placement requirement receiving module, configured to receive placement requirement information of advertisement content and identification information of a storage space corresponding to the advertisement content which are sent by an advertisement policy and charging control function, where the placement requirement information includes one or more items of a matching keyword, a placement area, placement object information, and a placement time segment;
an attribute information determining module, configured to determine that attribute information of data to be fed back to a user satisfies one or more items of the matching keyword, the placement area, the placement object information, and the placement time segment in the placement requirement information; and
a data matching insertion module, configured to insert the advertisement content into the data after the attribute information determining module determines that the attribute information of the data to be fed back to the user satisfies one or more items of the matching keyword, the placement area, the placement object information, and the placement time segment in the placement requirement information received by the placement requirement receiving module, where the advertisement content is advertisement content requested in advance or in real time from an advertisement storage according to the identification information of the storage space received by the placement requirement receiving module.

In a seventh aspect, a terminal is provided and includes:
a placement requirement receiving module, configured to receive placement requirement information of advertisement content and identification information of a storage space corresponding to the advertisement content which are sent by an advertisement policy and charging control function, where the placement requirement information includes one or more items of a matching keyword, a placement area, placement object information, and a placement time segment;
an attribute information determining module, configured to determine that attribute information of data to be fed back to a user satisfies one or more items of the matching keyword, the placement area, the placement object information, and the placement time segment in the placement requirement information; and
a data matching insertion module, configured to insert the advertisement content into the data after the attribute information determining module determines that the attribute information of the data to be fed back to the user satisfies one or more items of the matching keyword, the placement area, the placement object information, and the placement time segment in the placement requirement information received by the placement requirement receiving module, where the advertisement content is advertisement content requested in advance or in real time from an advertisement storage according to the identification information of the storage space received by the placement requirement receiving module.

In an eighth aspect, a terminal is provided and includes:
a placement requirement receiving module, configured to receive placement requirement information of advertisement content and identification information of a storage space corresponding to the advertisement content which are sent by an advertisement policy and charging control function, where the placement requirement information includes a matching trigger event;
a trigger event determining module, configured to determine that a trigger event collected by a terminal is the same as the matching trigger event in the placement requirement information; and
a behavior matching insertion module, configured to play the advertisement content on a screen of the terminal after the trigger event determining module determines that the trigger event collected by the terminal is the same as the matching trigger event in the placement requirement information, where the advertisement content is advertisement content requested in advance or in real time from an advertisement storage according to the identification information of the storage space received by the placement requirement receiving module.

In a ninth aspect, an advertisement storage system is provided and includes an advertisement policy and charging control function as provided in the fourth aspect and an advertisement storage as provided in the fifth aspect.

In a tenth aspect, an advertisement insertion system is provided and includes an advertisement policy and charging control function as provided in the fourth aspect, an advertisement storage as provided in the fifth aspect, and an advertisement insertion device as provided in the sixth aspect.

In an eleventh aspect, an advertisement insertion system is provided and includes an advertisement policy and charging control function as provided in the fourth aspect, an advertisement storage as provided in the fifth aspect, and a terminal as provided in the seventh aspect.

In a twelfth aspect, an advertisement insertion system is provided and includes an advertisement policy and charging control function as provided in the fourth aspect, an advertisement storage as provided in the fifth aspect, and a terminal as provided in the eighth aspect.

An advertisement policy and charging control function receives identification information and description information which are of advertisement content and are sent by an advertisement providing device, and further determines, according to whether the description information of the advertisement content satisfies a preset condition, whether to store an advertisement, thereby solving a problem in the prior art that it takes a long time to manually determine whether to store an advertisement, and achieving an effect that whether to store an advertisement can be determined without relying on manual labor.

An advertisement storage automatically requests advertisement content from an advertisement providing device according to identification information of the advertisement content, or an advertisement storage automatically receives advertisement content pushed by an advertisement providing device, thereby solving defects in the prior art that it takes a long time to store an advertisement because advertisement content is provided for a storage mainly by using a communication tool such as an email or an instant messaging program, and that storing of the advertisement is low in efficiency because the storing is mainly completed manually, and achieving an effect that an advertisement storage can automatically complete an advertisement storing process.

An advertisement insertion device or a terminal inserts an advertisement according to a placement requirement which is of advertisement content and is provided by an advertisement policy and charging control function, thereby solving a problem in the prior art that advertisement insertion mainly relies on a specific server in the Internet and an advertisement cannot be inserted if a terminal does not request data from the specific server, and achieving an effect that an advertisement can be inserted when an advertisement insertion device or a terminal accesses any server in the Internet, or by even only relying on a trigger event triggered by a user operation while a terminal does not access any server in the Internet.

In summary, processes of automatically receiving, storing, and inserting an advertisement can be achieved by an advertisement insertion system including an advertisement policy and charging control function, an advertisement storage, an advertisement insertion device, and a terminal without any manual intervention by a service provider. Compared with the prior art in which an advertisement storing process and a process of setting an advertisement in an administered server are completed by using a lot of manual labor resources and time resources, not only manual labor resources and time resources can be saved, but also advertisement insertion efficiency can be significantly improved.

### BRIEF DESCRIPTION OF DRAWINGS

To describe the technical solutions in the embodiments of the present invention more clearly, the following briefly introduces accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of an advertisement insertion system provided by an embodiment of the present invention;
FIG. 2 is a method flow chart of an advertisement storage method provided by an embodiment of the present invention;
FIG. 3 is a method flow chart of an advertisement storage method provided by another embodiment of the present invention;
FIG. 4 is a method flow chart of an advertisement storage method provided by still another embodiment of the present invention;
FIG. 5 is a method flow chart of an advertisement storage method provided by yet another embodiment of the present invention;
FIG. 6 is a method flow chart of an advertisement insertion method provided by an embodiment of the present invention;
FIG. 7 is a method flow chart of an advertisement insertion method provided by another embodiment of the present invention;
FIG. 8 is a method flow chart of an advertisement insertion method provided by still another embodiment of the present invention;
FIG. 9 is a method flow chart of an advertisement insertion method provided by yet another embodiment of the present invention;
FIG. 10 is a structural block diagram of an advertisement policy and charging control function provided by an embodiment of the present invention;
FIG. 11 a to FIG. 11c are structural block diagrams of an advertisement policy and charging control function provided by another embodiment of the present invention;
FIG. 12 is a structural block diagram of an advertisement storage provided by an embodiment of the present invention;
FIG. 13a and FIG. 13b are structural block diagrams of an advertisement storage provided by another embodiment of the present invention;
FIG. 14a and FIG. 14b are structural block diagrams of an advertisement storage provided by still another embodiment of the present invention;
FIG. 15 is a structural block diagram of an advertisement insertion device provided by an embodiment of the present invention;
FIG. 16 is a structural block diagram of an advertisement insertion device provided by another embodiment of the present invention;
FIG. 17 is a structural block diagram of a terminal provided by an embodiment of the present invention;
FIG. 18a and FIG. 18b are structural block diagrams of a terminal provided by another embodiment of the present invention;
FIG. 19 is a structural block diagram of a terminal provided by an embodiment of the present invention;
FIG. 20a and FIG. 20b are structural block diagrams of a terminal provided by another embodiment of the present invention;
FIG. 21 is a structural block diagram of an advertisement storage system provided by an embodiment of the present invention;
FIG. 22 is a structural block diagram of an advertisement insertion system provided by an embodiment of the present invention;
FIG. 23 is a structural block diagram of an advertisement insertion system provided by another embodiment of the present invention; and
FIG. 24 is a structural block diagram of an advertisement insertion system provided by still another embodiment of the present invention.

### DESCRIPTION OF EMBODIMENTS

To make the objectives, technical solutions, and advantages of the present invention more comprehensible, the following further describes the present invention in detail with reference to the accompanying drawings. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

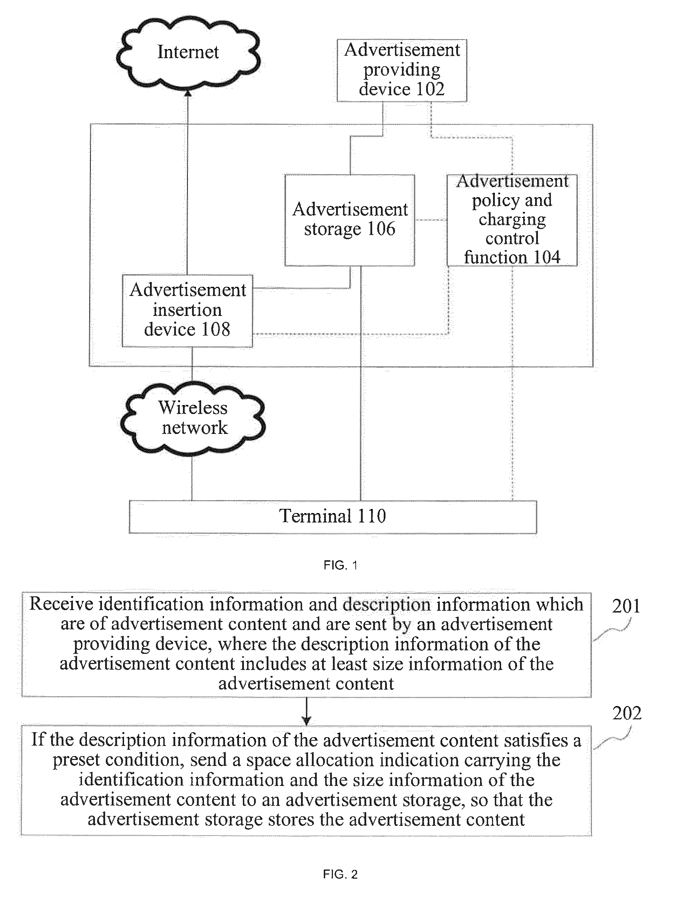

Referring to FIG. 1, FIG. 1 shows a schematic structural diagram of an advertisement insertion system provided by an embodiment of the present invention. The advertisement insertion system includes an advertisement providing device 102, an advertisement policy and charging control function 104, an advertisement storage 106, an advertisement insertion device 108, and a terminal 110.

The advertisement providing device 102 may specifically be a personal computer or a server in a place where an advertising company or enterprise is located, and is connected to each of the advertisement policy and charging control function 104 and the advertisement storage 106 through a wireless or wired network.

The advertisement policy and charging control function 104 is also called APCF (Advertisement Policy and Charging Control Function, advertisement policy and charging control function), may specifically be an independently disposed server, and is connected to each of the advertisement providing device 102 and the advertisement storage 106 through a wireless or wired network.

The advertisement storage 106 may specifically be an independently disposed server, an independently disposed storage or storage network, or a storage or storage network disposed in the advertisement policy and charging control function 104, and is connected to each of the advertisement providing device 102 and the advertisement policy and charging control function 104 through a wireless or wired network.

The advertisement insertion device 108 is also called AIF (Advertisement Insert Funtion, advertisement insert function entity). As a logic network element, the advertisement insertion device 108 may be disposed on a network element that belongs to a wireless carrier and is located on a path through which the terminal 110 accesses the Internet; for example, the advertisement insertion device is directly deployed on a PGW (Packet Data network Gateway, packet data network gateway) or a GGSN (Gateway GPRS Support Node, gateway GPRS support node), or deployed on a data channel between a PGW or a GGSN and a PDN (Packet Data Network, packet data network). The advertisement insertion device 108 is connected to each of the advertisement policy and charging control function 104 and the advertisement storage 106 through a wireless or wired network.

The terminal 110 may be a UE (User Equipment, user equipment), and may also be connected to each of the advertisement policy and charging control function 104 and the advertisement storage 106 through a wireless network.

Certainly, in some embodiments, the advertisement insertion device 108 and the terminal 110 may also be connected to the advertisement storage 106 only. Signaling related to the advertisement policy and charging control function 104 is forwarded by the advertisement storage 106.

For further detailed description of the foregoing advertisement insertion system and each device in the system, continue to refer to the following embodiments:

Referring to FIG. 2, FIG. 2 shows a method flow chart of an advertisement storage method provided by an embodiment of the present invention. This embodiment is described by using an example in which the advertisement storage method is applied in an advertisement policy and charging control function shown in FIG. 1. The advertisement storage method includes the following steps:
201: Receive identification information and description information which are of advertisement content and are sent by an advertisement providing device, where the description information of the advertisement content includes at least size information of the advertisement content.

An advertisement policy and charging control function may receive the identification information and the description information which are of the advertisement content and are sent by the advertisement providing device. The identification information of the advertisement content is used for uniquely identifying the advertisement content in the advertisement providing device; for example, the identification information may be a set of unique code words or character strings, for example, the unique code words may be 23ljsdhrfgh3r6d8dhjtjl23j4l23j45jl, or a URL (Universal Resource Locator, universal resource locator) corresponding to the advertisement content when the advertisement content is stored in the advertisement providing device; the description information of the advertisement content is used for describing information about attributes of the advertisement content, should include at least size information of the advertisement content, and usually further includes one or more items of type information, resolution information, encoding information, a language type, and placement requirement information of the advertisement content. In a different embodiment, the description information of the advertisement content may also be referred to as metadata.

It should be additionally noted that the advertisement policy and charging control function may receive the identification information and the description information which are of the advertisement content and are sent by the advertisement providing device at the same time; and may also receive the identification information which is of the advertisement content and is sent by the advertisement providing device first, and then receive the description information which is of the advertisement content and is sent by the advertisement providing device.
202: If the description information of the advertisement content satisfies a preset condition, send a space allocation indication carrying the identification information and the size information of the advertisement content to an advertisement storage, so that the advertisement storage stores the advertisement content.

After receiving the identification information and the description information of the advertisement content, the advertisement policy and charging control function may determine whether the description information of the advertisement content satisfies the preset condition. The preset condition may be a condition formulated in an SLA (Service Level Agreement, service level agreement) defined in a business contract about the advertisement content signed in advance. For example, the preset condition is that a type of the advertisement content should be video, a size should not exceed 20MB, and a language should be English. If the description information of the advertisement content satisfies the preset condition, the advertisement policy and charging control function sends a space allocation indication carrying the identification information and the size information of the advertisement content to the advertisement storage, so that the advertisement storage stores the advertisement content. When the description information of the advertisement content includes at least the size information of the advertisement content, the advertisement policy and charging control function may determine, according to whether a value in the size information of the advertisement content is smaller than a preset threshold, whether the description information of the advertisement content satisfies the preset condition. According to different manners in which the advertisement storage stores the advertisement content, this step may specifically include the following sub-steps:

First, if the description information of the advertisement content satisfies the preset condition, the advertisement policy and charging control function sends a space allocation indication carrying the identification information and the size information of the advertisement content to the advertisement storage, so that the advertisement storage allocates a corresponding storage space to the advertisement content according to the identification information and the size information of the advertisement content, and that the advertisement storage requests the advertisement content from the advertisement providing device according to the identification information of the advertisement content and stores the advertisement content sent by the advertisement providing device in the storage space.

Second, if the description information of the advertisement content satisfies the preset condition, the advertisement policy and charging control function sends a space allocation indication carrying the identification information and the size information of the advertisement content to the advertisement storage, so that the advertisement storage allocates a corresponding storage space to the advertisement content according to the identification information and the size information of the advertisement content, and that the advertisement storage generates identification information of the storage space, sends the identification information of the storage space to the advertisement providing device, receives the advertisement content pushed according to the identification information of the storage space by the advertisement providing device to the storage space, and stores the advertisement content.

In summary, in the advertisement storage method provided by this embodiment, the identification information and the description information which are of the advertisement content and are sent by the advertisement providing device are received, and further, whether to store an advertisement is determined according to whether the description information of the advertisement content satisfies the preset condition, thereby solving a problem in the prior art that it takes a long time to manually determine whether to store an advertisement, and achieving an effect that whether to store an advertisement can be determined without relying on manual labor.

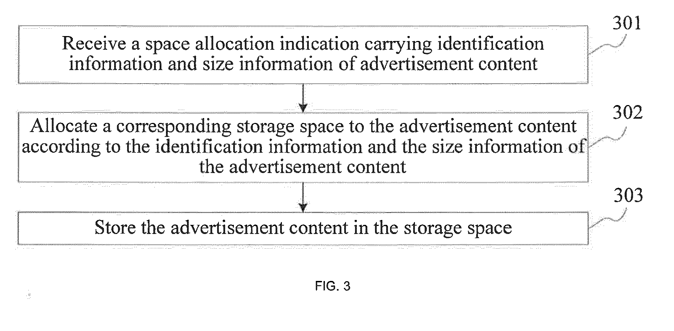

Referring to FIG. 3, FIG. 3 shows a method flow chart of an advertisement storage method provided by another embodiment of the present invention. This embodiment is described by using an example in which the advertisement storage method is applied in an advertisement storage shown in FIG. 1. The advertisement storage method includes the following steps:
301: Receive a space allocation indication carrying identification information and size information of advertisement content.

An advertisement policy and charging control function may receive the identification information and the description information which are of the advertisement content and are sent by an advertisement providing device, and when the description information of the advertisement content satisfies a preset condition, the advertisement policy and charging control function sends the space allocation indication carrying the identification information and the size information of the advertisement content to an advertisement storage. Subsequently, the advertisement storage receives the space allocation indication which is sent by the advertisement policy and charging control function and carries the identification information and the size information of the advertisement content. The size information of the advertisement content is one kind of the description information of the advertisement content.
302: Allocate a corresponding storage space to the advertisement content according to the identification information and the size information of the advertisement content.

The advertisement storage allocates a corresponding storage space to the advertisement content according to the identification information and the size information of the advertisement content. Generally speaking, a size of the storage space allocated by the advertisement storage may be greater than or equal to a size indicated by the size information of the advertisement content. For example, if a size of the advertisement content is 20MB, the size of the storage space allocated by the advertisement storage may be 20MB+100KB, where the 100KB may be used for storing the identification information and the description information of the advertisement content, and so on.
303: Store the advertisement content in the storage space.

After allocating the storage space, the advertisement storage may store the advertisement content provided by the advertisement providing device in the storage space, which, according to different storage manners, may specifically include the following two situations:

First, the advertisement storage requests the advertisement content from the advertisement providing device according to the identification information of the advertisement content; the advertisement storage receives the advertisement content sent by the advertisement providing device, and stores the advertisement content in the storage space.

Second, the advertisement storage generates identification information of the storage space and provides the identification information of the storage space for the advertisement providing device, so that the advertisement providing device pushes the advertisement content to the storage space according to the identification information of the storage space; and the advertisement storage receives and stores the advertisement content.

In summary, in the advertisement storage method provided by this embodiment, the advertisement content is automatically requested from the advertisement providing device according to the identification information of the advertisement content, or the advertisement content pushed by the advertisement providing device is automatically received, thereby solving defects in the prior art that it takes a long time to store an advertisement because advertisement content is provided for a storage mainly by using a communication tool such as an email or an instant messaging program, and that storing of the advertisement is low in efficiency because the storing is mainly completed manually, and achieving an effect that an advertisement storage can automatically complete an advertisement storing process.

Two implementation manners exist when the advertisement storage stores the advertisement content. For further detailed description of a first implementation manner, refer to the following embodiment:

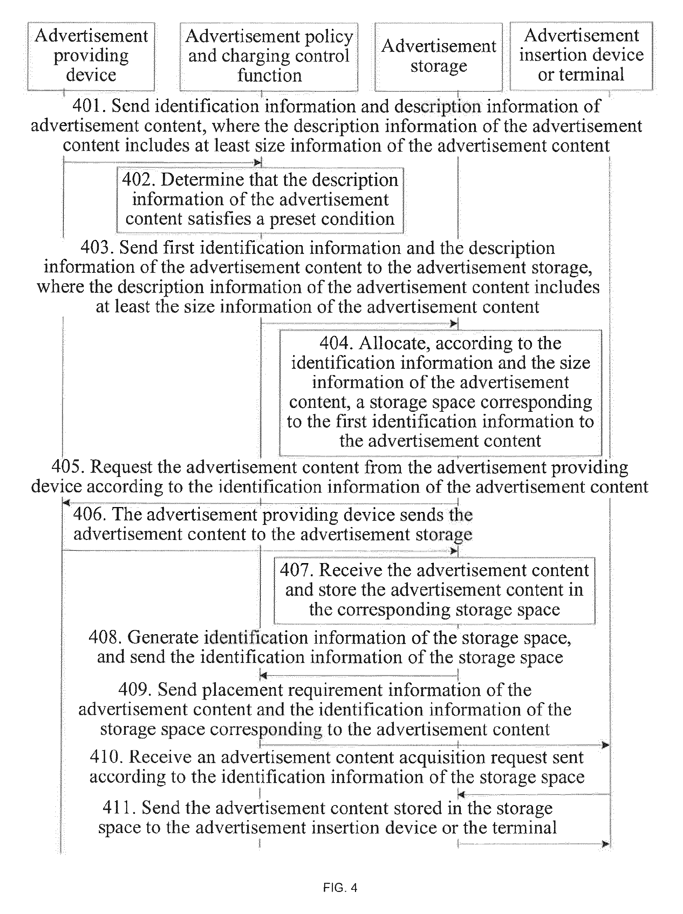

Referring to FIG. 4, FIG. 4 shows a method flow chart of an advertisement storage method provided by another embodiment of the present invention. This embodiment is described by using an example in which the advertisement storage method is applied in an advertisement insertion system shown in FIG. 1; the advertisement storage method includes the following steps:
401: An advertisement providing device sends identification information and description information of advertisement content to an advertisement policy and charging control function, where the description information of the advertisement content includes at least size information of the advertisement content.

The advertisement providing device may send the identification information and the description information of the advertisement content to the advertisement policy and charging control function, where the description information of the advertisement content includes at least the size information of the advertisement content.

Specifically, the advertisement providing device may send the identification information and the description information of the advertisement content to the advertisement policy and charging control function at the same time; and may also send the identification information and the description information of the advertisement content to the advertisement policy and charging control function separately. The embodiment of the present invention is described by using an example in which the advertisement providing device sends the identification information and the description information of the advertisement content to the advertisement policy and charging control function at the same time.

When the advertisement providing device sends the identification information and the description information of the advertisement content to the advertisement policy and charging control function separately, this step may include the following sub-steps: First, the advertisement providing device sends the identification information of the advertisement content to the advertisement policy and charging control function; second, the advertisement policy and charging control function receives the identification information of the advertisement content; third, the advertisement policy sends a description information acquisition request to the advertisement providing device according to the identification information of the advertisement content, where the description information acquisition request carries the identification information of the advertisement content; fourth, after receiving the description information acquisition request, the advertisement providing device sends the description information of the corresponding advertisement content to the advertisement policy and charging control function according to the identification information of the advertisement content carried in the description information acquisition request; and fifth, the advertisement policy and charging control function receives the description information which is of the advertisement content and is sent by the advertisement providing device.

In this embodiment, the identification information of the advertisement content may be a URL corresponding to the advertisement content when the advertisement content is stored in the advertisement providing device; the description information of the advertisement content may not only include the size information of the advertisement content, but also include one or more items of type information, resolution information, encoding information, a language type, and placement requirement information of the advertisement content. The type information of the advertisement content may include, but is not limited to, one or more items of text, picture, audio, and video; the size information of the advertisement content may be a data volume represented by using MB, KB, and the like; the resolution information of the advertisement content may be resolution corresponding to a picture or video; the encoding information of the advertisement content may be an encoding format corresponding to a picture or video; the language type of the advertisement content may include, but is not limited to, one or more items of Chinese, English, French, and Japanese; the placement requirement information of the advertisement content may include, but is not limited to, one or more items of a matching keyword, a matching trigger event, a placement area, placement object information, and a placement time segment.
402: The advertisement policy and charging control function determines that the description information of the advertisement content satisfies a preset condition.

After receiving the identification information and the description information of the advertisement content, the advertisement policy and charging control function may determine whether the description information of the advertisement content satisfies the preset condition. Because information included in the description information of the advertisement content may be a combination of multiple items of information, correspondingly, that the advertisement policy and charging control function determines that the description information of the advertisement content satisfies the preset condition includes one or more of the following situations:
determining that a type in the type information of the advertisement content satisfies a preset type, where the preset type includes, but is not limited to, one or more kinds of text, image, audio, and video;
determining that resolution in the resolution information of the advertisement content is smaller than or equal to preset resolution, where for example, the preset resolution is 960*640 pixels, 320*240 pixels, and so on;
determining that an encoding rule in the encoding information of the advertisement content satisfies a preset encoding rule, where for example, the preset encoding rule is a text encoding rule Unicode, video encoding H.264, and so on;
determining whether a value in the size information of the advertisement content is smaller than a preset threshold, where for example, the preset threshold is 20MB;
determining that a language in the language information of the advertisement content satisfies a preset language, where for example, the preset language is English or Chinese; and
determining that a placement requirement in the placement requirement information of the advertisement content satisfies a preset placement requirement, where for example, the preset placement requirement includes a matching keyword "shampoo", a placement area "Beijing", placement object information "female", and a placement time segment "18:00-24:00 every day".

If the advertisement policy and charging control function determines that the description information of the advertisement content satisfies the preset condition, 403 is performed.
403: The advertisement policy and charging control function sends the identification information and the description information of the advertisement content to an advertisement storage to an advertisement storage, where the description information of the advertisement content includes at least the size information of the advertisement content.

The advertisement policy and charging control function sends the identification information and the description information of the advertisement content to the advertisement storage, so as to instruct the advertisement storage to allocate a corresponding storage space to the advertisement content.
404: The advertisement storage allocates a corresponding storage space to the advertisement content according to the identification information and the size information of the advertisement content.

The advertisement storage may receive the identification information and the description information which are of the advertisement content and are sent by the advertisement policy and charging control function. Then, the advertisement storage allocates, according to the size information of the advertisement content, a corresponding storage space to the advertisement content identified by the identification information. Generally speaking, a size of the storage space allocated by the advertisement storage may be greater than or equal to a size indicated by the size information of the advertisement content, for example, if a size of the advertisement content is 20MB, the size of the storage space allocated by the advertisement storage may be 20MB+100KB, where the 100KB may be used for storing the identification information and the description information of the advertisement content; for another example, if the size of the advertisement content is 10MB and the size of the description information of the advertisement content is 102KB, the size of the storage space allocated by the advertisement storage may be 10MB+102KB.
405: The advertisement storage requests the advertisement content from the advertisement providing device according to the identification information of the advertisement content.

The advertisement storage requests the advertisement content from the advertisement providing device according to the identification information of the advertisement content. For example, in this embodiment, the identification information of the advertisement content is a URL corresponding to the advertisement content when the advertisement content is stored in the advertisement providing device, and the advertisement storage may request the advertisement content from the advertisement providing device by using an HTTP (hypertext transport protocol, hypertext transport protocol) GET command or in an FTP (File Transfer Protocol, file transfer protocol) manner; if the identification information of the advertisement content is a set of unique code words or character strings, for example, the unique code words may be 23ljsdhrfgh3r6d8dhjtjl23j4l23j45jl, the advertisement storage may first send an advertisement content acquisition request to the advertisement providing device, where the advertisement content acquisition request carries the identification information of the advertisement content; then the advertisement storage receives the URL which is fed back by the advertisement providing device and corresponds to the advertisement content when the advertisement content is stored in the advertisement providing device, and then performs the foregoing step.
406: The advertisement providing device sends the advertisement content to the advertisement storage.

The advertisement providing device sends the advertisement content corresponding to the identification information to the advertisement storage.
407: The advertisement storage receives the advertisement content and stores the advertisement content in the corresponding storage space.
408: The advertisement storage generates identification information of the storage space, and sends the identification information of the storage space to the advertisement policy and charging control function.

After the advertisement storage successfully stores the advertisement content, the advertisement storage generates identification information for identifying the storage space. Specifically, the identification information of the storage space may be a URL corresponding to the storage space. Then, the advertisement storage may send the identification information of the storage space to the advertisement policy and charging control function. The advertisement policy and charging control function may store the identification information of the storage space, and associate the identification information of the storage space with the identification information and the description information of the corresponding advertisement content.
409: If the description information of the advertisement content includes placement requirement information of the advertisement content, the advertisement policy and charging control function sends, to an advertisement insertion device or a terminal, the placement requirement information of the advertisement content and the identification information of the storage space corresponding to the advertisement content.

If the description information of the advertisement content includes the placement requirement information of the advertisement content, the advertisement policy and charging control function sends, to the advertisement insertion device or the terminal, the placement requirement information of the advertisement content and the identification information of the storage space corresponding to the advertisement content, so that the advertisement insertion device or the terminal inserts the advertisement content according to the placement requirement information of the advertisement content.

It should be particularly noted that, the terminal is not always accessing the Internet; therefore, when the terminal does not access the Internet, the advertisement policy and charging control function cannot send, to the terminal, the placement requirement information of the advertisement content and the identification information of the storage space corresponding to the advertisement content. In this case, the advertisement policy and charging control function may first perform the following steps:
First, send preset short information to the terminal, so that the terminal establishes an Internet connection after receiving the preset short information.

The advertisement policy and charging control function may send the preset short information to the terminal when the terminal does not access the Internet, so that the terminal establishes an Internet connection after receiving the preset short information. Preferably, the advertisement policy and charging control function may send the preset short information to the terminal when the terminal is idle, for example, at 1:00 in the morning. Content of the preset short information may be a set of code words or an instruction, and may also carry an IP address of the advertisement policy and charging control function in a packet switched network, which is not limited herein, as long as the terminal can be triggered to establish an Internet connection after receiving the preset short information. The "Internet connection" herein usually refers to a connection established by the terminal in a packet switched network.

Second, receive an information acquisition request sent by using the established Internet connection by the terminal, where the information acquisition request is used for requesting the placement requirement information of the advertisement content and/or the identification information of the storage space corresponding to the advertisement content.

After establishing the Internet connection, the terminal may actively send the information acquisition request to the advertisement policy and charging control function, where the information acquisition request is used for requesting the placement requirement information of the advertisement content and/or the identification information of the storage space corresponding to the advertisement content. In this case, the advertisement policy and charging control function sends, to the terminal, the placement requirement information of the advertisement content and the identification information of the storage space corresponding to the advertisement content.
410: The advertisement storage receives an advertisement content acquisition request sent according to the identification information of the storage space by the advertisement insertion device or the terminal.

When or before the advertisement insertion device or the terminal inserts an advertisement, the advertisement content acquisition request may be sent to the advertisement storage according to the identification information of the storage space. The advertisement storage receives the advertisement content acquisition request sent according to the identification information of the storage space by the advertisement insertion device or the terminal.
411: The advertisement storage sends the advertisement content stored in the storage space to the advertisement insertion device or the terminal.

After receiving the advertisement content acquisition request, the advertisement storage sends the advertisement content stored in the corresponding storage space to the advertisement insertion device or the terminal, so that the advertisement insertion device or the terminal inserts the advertisement content.

In summary, in the advertisement storage method provided by this embodiment, the advertisement policy and charging control function receives the identification information and the description information which are of the advertisement content and are sent by the advertisement providing device, and further determines, according to whether the description information of the advertisement content satisfies a preset condition, whether to store the advertisement, thereby solving a problem in the prior art that it takes a long time to manually determine whether to store an advertisement, and achieving an effect that whether to store an advertisement can be determined without relying on manual labor. The advertisement storage automatically requests the advertisement content from the advertisement providing device according to the identification information of the advertisement content, or the advertisement storage automatically receives the advertisement content pushed by the advertisement providing device, thereby solving defects in the prior art that it takes a long time to store an advertisement because advertisement content is provided for a storage mainly by using manual labor or a communication tool such as an email or an instant messaging program, and that storing of the advertisement is low in efficiency because the storing is mainly completed manually, and achieving an effect that an advertisement storage can automatically complete an advertisement storing process. In addition, the advertisement storage actively requests the advertisement content from the advertisement providing device, and therefore, when a great deal of advertisement content is stored, the advertisement storage may choose, according to its load, a moment for actively requesting the advertisement content, which helps reducing processing pressure of the advertisement storage during peak time. Moreover, the advertisement policy and charging control function sends the preset short information to the terminal, which triggers the terminal to establish an Internet connection so as to actively acquire related information of the advertisement content from the advertisement policy and charging control function, thereby solving a problem in the prior art that advertisement insertion cannot be implemented when a terminal does not access a specific server in the Internet, and achieving an effect that even if a terminal does not access the Internet, an advertisement policy and charging control function may still actively trigger the terminal to acquire related information of advertisement content so as to insert an advertisement, rather than passively waiting for the terminal to acquire the advertisement content and the related information.

Two implementation manners exist when the advertisement storage stores the advertisement content. In the previous embodiment, the first implementation manner is described in detail; for further detailed description of a second implementation manner, refer to the following embodiment.

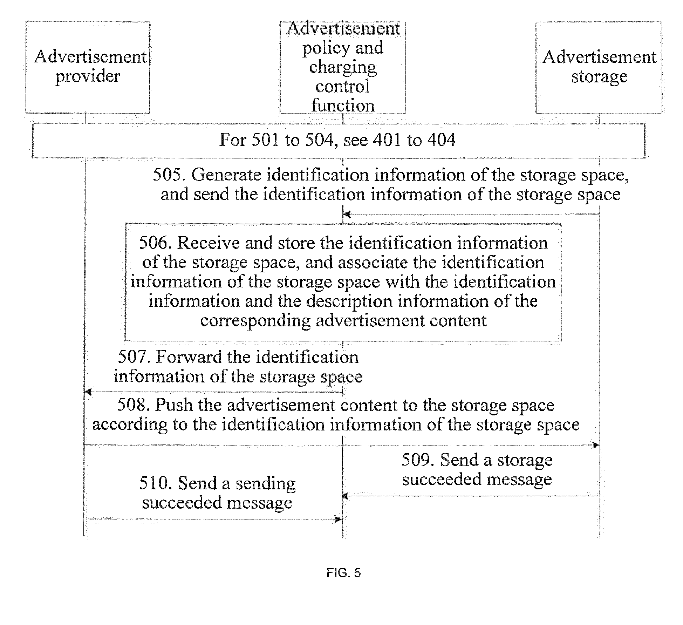

Referring to FIG. 5, FIG. 5 shows a method flow chart of an advertisement storage method provided by still another embodiment of the present invention. This embodiment is still described by using an example in which the advertisement storage method is applied in an advertisement insertion system shown in FIG. 1. However, this embodiment differs from the previous embodiment in that advertisement content is pushed by an advertisement providing device to an advertisement storage. The advertisement storage method specifically includes the following steps:
Step 501 to step 504 are similar to step 401 to step 404, and a difference lies in the following steps:
505: The advertisement storage generates identification information of the storage space, and sends the identification information of the storage space to the advertisement policy and charging control function.

After the advertisement storage successfully allocates the storage space, the advertisement storage generates the identification information used for identifying the storage space. Specifically, the identification information of the storage space may be a URL corresponding to the storage space. Certainly, the identification information of the storage space may also be a set of code words or character strings that can uniquely identifying the storage space, and the like. Then, the advertisement storage may send the identification information of the storage space to the advertisement policy and charging control function.
506: The advertisement policy and charging control function receives and stores the identification information of the storage space, and associates the identification information of the storage space with the identification information and the description information of the corresponding advertisement content.
507: The advertisement policy and charging control function forwards the identification information of the storage space to the advertisement providing device.
508: The advertisement providing device pushes the advertisement content to the storage space according to the identification information of the storage space.

If the identification information of the storage space is a URL corresponding to the storage space, the advertisement providing device may push, by using an HTTP POST command or an FTP command, the advertisement content to the storage space indicated by the identification information of the storage space.
509: After successfully receiving the advertisement content identified by the identification information, the advertisement storage sends a storage success message to the advertisement policy and charging control function.

After successfully receiving the advertisement content identified by the identification information, the advertisement storage sends the storage success message to the advertisement policy and charging control function. At the same time, the advertisement storage may also send, to the advertisement providing device, feedback information used for indicating that the advertisement content identified by the identification information is successfully received.
510: After successfully pushing the advertisement content to the corresponding storage space, the advertisement providing device sends a sending success message to the advertisement policy and charging control function.

After receiving the feedback information which is sent by the advertisement storage and is used for indicating that the advertisement content identified by the identification information is successfully received, the advertisement providing device may also send the sending success message to the advertisement policy and charging control function.

In the following, the advertisement policy and charging control function may also continue to perform content as described in 409 to 411, which is not repeatedly described herein.

In summary, compared with the previous embodiment, the advertisement providing device pushes the advertisement content to the advertisement storage, so that part of signaling and procedures are processed by the advertisement providing device instead of the advertisement storage during a storing process of the advertisement content, thereby saving signaling and reducing processing pressure of the advertisement storage.

After the advertisement content is stored in the advertisement storage, the advertisement content further needs to be inserted by an advertisement insertion device or a terminal. Therefore, continue to refer to the following embodiments:

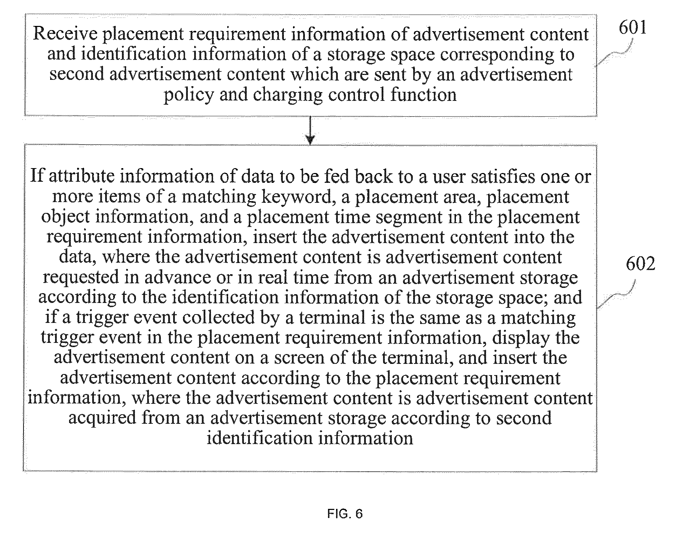

Referring to FIG. 6, FIG. 6 shows a method flow chart of an advertisement insertion method provided by an embodiment of the present invention. This embodiment is described by using an example in which the advertisement insertion method is applied in an advertisement insertion device or a terminal shown in FIG. 1. The advertisement insertion method includes the following steps:
601: Receive placement requirement information of advertisement content and identification information of a storage space corresponding to the advertisement content which are sent by an advertisement policy and charging control function.

An advertisement insertion device or a terminal may receive the placement requirement information of the advertisement content and the identification information of the storage space corresponding to the advertisement content which are sent by the advertisement policy and charging control function. The placement requirement information of the advertisement content is one-to-one corresponding to the identification information of the storage space corresponding to the advertisement content.

The placement requirement information of the advertisement content includes one or more items of a matching keyword, a placement area, placement object information, a placement time segment, and a matching trigger event. The matching keyword refers to a keyword that data or a website that a user requests to access should satisfy, and the keyword may be words such as cold medicine and coat; the placement area refers to a region where a user who requests to access data is located; the placement object information refers to a condition that a gender, an age, or a profession of a user who requests to access data should satisfy; the placement time segment refers to a time segment of each day, each week, each month or each year during which an advertisement should be placed and a total time span, for example one month or half a year. The placement requirement information may further include the number of times of advertisement placement or a duration of advertisement placement; the number of times of advertisement placement or the duration of advertisement placement refers to the total number of placement times or a placement duration demanded by the advertisement content.

The identification information of the storage space corresponding to the advertisement content is used for identifying the storage space corresponding to the advertisement content when the advertisement content is stored in an advertisement storage; specifically, the identification information of the storage space may be a URL corresponding to the storage space.
602: If attribute information of data to be fed back to a user satisfies one or more items of the matching keyword, the placement area, the placement object information, and the placement time segment in the placement requirement information, insert the advertisement content into the data, where the advertisement content is advertisement content requested in advance or in real time from the advertisement storage according to the identification information of the storage space; and
   if a trigger event collected by the terminal is the same as the matching trigger event in the placement requirement information, the advertisement content is played on a screen of the terminal.

The advertisement insertion device or the terminal may insert the advertisement content according to the placement requirement information, and in this case, two manners may be adopted: A first manner is analyzing data accessed by the user and attribute information of the data; and a second manner is analyzing behavior of the user. The first manner may be implemented by an advertisement insertion entity or a terminal, and the second manner can only be implemented by a terminal.

Specifically, if the attribute information of the data to be fed back to the user satisfies one or more items of the matching keyword, the placement area, the placement object information, and the placement time segment in the placement requirement information, the advertisement insertion device or the terminal inserts the advertisement content into the data to be fed back to the user, where the advertisement content is advertisement content requested in advance or in real time from the advertisement storage according to the identification information of the storage space.

If the trigger event collected by the terminal is the same as the matching trigger event in the placement requirement information, the terminal plays the advertisement content on the screen of the terminal, where the advertisement content is advertisement content requested by the terminal in advance or in real time from the advertisement storage according to the identification information of the storage space.

In summary, in the advertisement insertion method provided by this embodiment, the advertisement insertion device or the terminal inserts the advertisement according to a placement requirement which is of the advertisement content and is provided by the advertisement policy and charging control function, thereby solving a problem in the prior art that advertisement insertion mainly relies on a server in the Internet and an advertisement cannot be inserted if a terminal does not request data from the server, and achieving an effect that an advertisement can be inserted when an advertisement insertion device or a terminal accesses any server in the Internet, or by even only relying on a trigger event triggered by a user operation while a terminal does not access any server in the Internet.

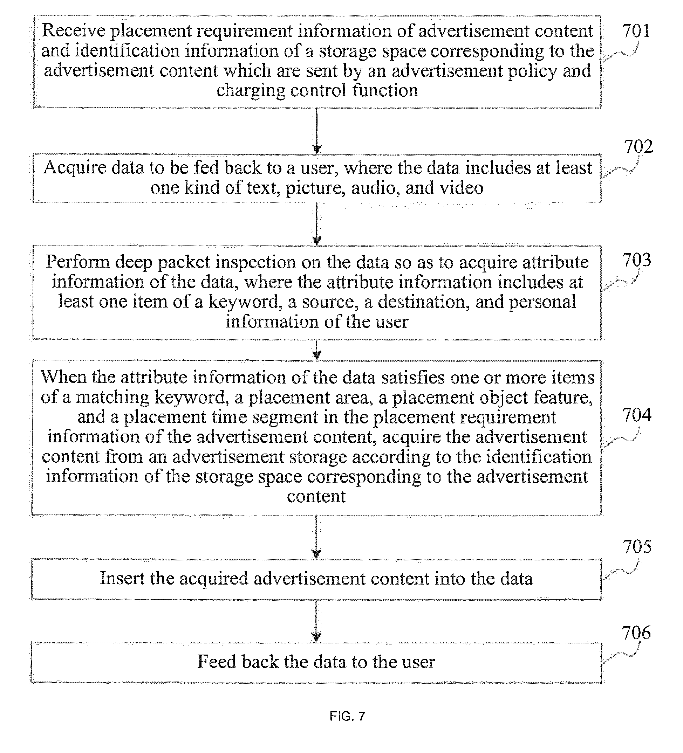

Referring to FIG. 7, FIG. 7 shows a method flow chart of an advertisement insertion method provided by another embodiment of the present invention. This embodiment is described by using an example in which the advertisement insertion method is applied in an advertisement insertion device shown in FIG. 1. The advertisement insertion method includes the following steps:
701: Receive placement requirement information of advertisement content and identification information of a storage space corresponding to the advertisement content which are sent by an advertisement policy and charging control function.

An advertisement insertion device may receive the placement requirement information of the advertisement content and the identification information of the storage space corresponding to the advertisement content which are sent by the advertisement policy and charging control function.

The advertisement insertion device may receive and store in advance placement requirement information of a plurality pieces of advertisement content and identification information of a storage space corresponding to the advertisement content.
702: Acquire data to be fed back to a user, where the data includes at least one kind of text, picture, audio, and video.

The advertisement insertion device is disposed on a network element that belongs to a wireless carrier and is located on a path through which a terminal accesses the Internet, for example, the advertisement insertion device is directly deployed on a PGW or a GGSN, or deployed on a data channel between a PGW or a GGSN and a PDN. The advertisement insertion device may acquire the data to be fed back to the user, where the data to be fed back to the user may be data that the user requests to access, and may specifically be at least one kind of text, picture, audio, and video. For example, the advertisement insertion device is a PGW; when the user requests data in a server in the Internet, the data fed back by the server in the Interne passes the PGW, and in this case, the advertisement insertion device may acquire the data to be fed back to the user.
703: Perform deep packet inspection on the data so as to acquire attribute information of the data, where the attribute information includes at least one item of a keyword, a source, a destination, and personal information of the user.

After the advertisement insertion device acquires the data requested by the terminal, the advertisement insertion device may perform DPI (Deep packet inspection, deep packet inspection) on the data so as to inspect content of the data, thereby acquiring attribute information of the data, where the attribute information may include at least one item of a keyword, a source, a destination, and personal information of the user. The keyword of the data refers to a keyword in text content or a title of the data; the source of the data refers to a source IP address of the data, or a region corresponding to a website corresponding to a URL of the data; the destination of the data refers to a region corresponding to an IP address of a user who requests the data. The attribute information of the data may further include part of content of the data, or personal information of the user obtained by analyzing the IP address of the user who requests the data, such as age, gender, and profession of the user.
704: When the attribute information of the data satisfies one or more items of a matching keyword, a placement area, a placement object feature, and a placement time segment in the placement requirement information of the advertisement content, acquire the advertisement content from an advertisement storage according to the identification information of the storage space corresponding to the advertisement content.

The advertisement insertion device determines whether the attribute information of the data satisfies one or more items of a matching keyword, a placement area, a placement object feature, and a placement time segment in placement requirement information of a certain piece of advertisement content; if a determination result is yes, the advertisement insertion device acquires the advertisement content from the advertisement storage according to the identification information of the storage space corresponding to the advertisement content. Specifically, that the advertisement insertion device determines that the attribute information of the data to be fed back to the user satisfies one or more items of the matching keyword, the placement area, the placement object feature, and the placement time segment in the placement requirement information includes one or more of the following situations:
determining that data acquisition time in the attribute information of the data to be fed back to the user satisfies the placement time segment in the placement requirement information, where for example, if time acquisition time when the user requests the data is 22:31, and a placement time segment of an advertisement is 22:00 to 24:00 every day, the data acquisition time in the attribute information satisfies the placement time segment in the placement requirement information;
determining that the keyword in the attribute information of the data to be fed back to the user satisfies the matching keyword in the placement requirement information, where for example, if a keyword of the data requested by the user includes beauty, perfume, and alcohol, and the matching keyword in the placement requirement information includes perfume, the keyword in the attribute information satisfies the matching keyword in the placement requirement information;
determining that one or both of the source and destination in the attribute information of the data to be fed back to the user satisfy the placement area in the placement requirement information, where for example, if a region corresponding to the IP address of the user is Beijing, and the placement area in the placement requirement information is Beijing or Shanghai, the destination in the attribute information satisfies the placement area in the placement requirement information; and
determining that the personal information of the user in the attribute information of the data to be fed back to the user satisfies placement object information in the placement requirement information, where for example, if personal information of the user includes female and 26 years old, and the placement object information in the placement requirement information is female above 15 years old, the personal information of the user in the attribute information satisfies the placement object information in the placement requirement information.

In this case, the advertisement insertion device acquires the advertisement content from the advertisement storage according to the identification information of the storage space corresponding to the advertisement content. For example, in this embodiment, if the identification information of the storage space is a URL of the storage space in the advertisement storage, the advertisement insertion device may request the advertisement content from the advertisement storage by using an HTTP GET command or in an FTP manner; if the identification information of the storage space is a set of code words or character strings, the advertisement insertion device may first send an advertisement content acquisition request to the advertisement storage, where the advertisement content acquisition request carries the identification information of the storage space, and subsequently, the advertisement insertion device receives the URL of the storage space fed back by the advertisement storage, and then performs the step of acquiring the advertisement content from the advertisement storage.
705: Insert the acquired advertisement content into the data.

The advertisement insertion device inserts the acquired advertisement content into the data requested by the user. Specifically, when the data to be fed back to the user is a web page, the advertisement insertion device may insert the advertisement content into the beginning part, the end part, and two side parts of the web page; when the data to be fed back to the user is video, the advertisement insertion device may insert the advertisement content into the beginning, the middle, or the end of the video, and may choose an insertion manner of covering an entire display area of the video or covering a partial display area of the video.

After the advertisement content is inserted, the advertisement insertion device may record related data of the current advertisement insertion process, so as to facilitate subsequent query and statistics.
706: Feed back the data to the user.

After the advertisement content is inserted, the advertisement insertion device may feed back the data in which the advertisement content is inserted to the user. Specifically, the advertisement insertion device sends the data in which the advertisement content is inserted to a terminal used by the user.

It should be noted that, in order to reduce time from a moment the user requests the data to a moment the data is acquired, in 704, the part of acquiring the advertisement content from the advertisement storage according to the identification information of the storage space may be performed before 702. In this case, before the user requests data, the advertisement insertion device may acquire at least one piece of advertisement content from the advertisement storage and store the advertisement content locally, and then in step 704, directly selects one of locally stored advertisements for insertion. That is to say, the advertisement content inserted in 704 is advertisement content requested by the advertisement insertion device in advance or in real time from the advertisement storage according to the identification information of the storage space. In this embodiment, that the advertisement insertion device requests the advertisement content from the advertisement storage according to the identification information of the storage space in real time is taken as an example for description; however, the advertisement insertion device may also request the advertisement content from the advertisement storage according to the identification information of the storage space in advance.

In summary, in the advertisement insertion method provided by this embodiment, the advertisement insertion device disposed on the network element that belongs to the wireless carrier and is located on the path through which the terminal accesses the Internet inserts an advertisement according to whether the data to be fed back to the user satisfies the placement requirement information which is of the advertisement content and is provided by the advertisement policy and charging control function, thereby solving a problem in the prior art that advertisement insertion mainly relies on a specific server in the Internet and an advertisement cannot be inserted if a terminal does not request data from the specific server, and achieving an effect that an advertisement insertion device can insert an advertisement when a terminal accesses any server in the Internet.

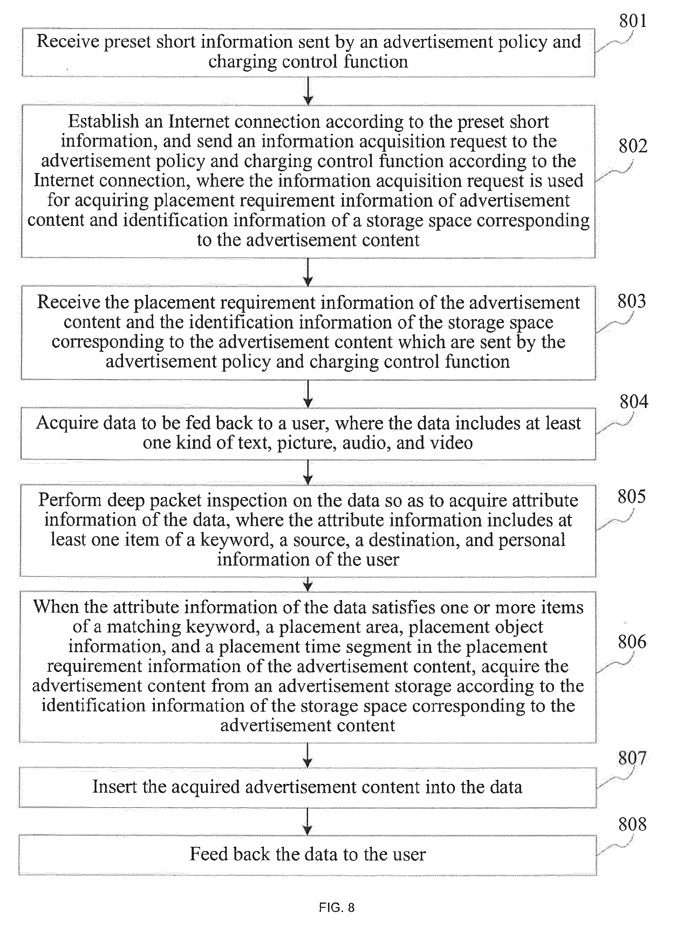

The advertisement insertion method provided in the previous embodiment may also be performed by a terminal; refer to the following embodiments:
Referring to FIG. 8, FIG. 8 shows a method flow chart of an advertisement insertion method provided by another embodiment of the present invention. This embodiment is described by using an example in which the advertisement insertion method is applied in a terminal shown in FIG. 1. The advertisement insertion method includes the following steps:

801: Receive preset short information sent by an advertisement policy and charging control function.

After a terminal establishes a PDN connection through a PGW or a GGSN to access the Internet, the terminal may directly receive placement requirement information of advertisement content and identification information of a storage space corresponding to the advertisement content which are sent by the advertisement policy and charging control function. However, different from an advertisement insertion device, the terminal is not always accessing the Internet, so when the terminal does not access the Internet initially, the terminal may first receive preset SMS (Short Messaging Service, short messaging service) information sent by the advertisement policy and charging control function. The preset SMS may be information predetennined by the advertisement policy and charging control function and the terminal.
802: Establish an Internet connection according to the preset short information, and send an information acquisition request to the advertisement policy and charging control function according to the Internet connection, where the information acquisition request is used for acquiring placement requirement information of advertisement content and identification information of a storage space corresponding to the advertisement content.

After receiving the preset SMS information, the terminal may actively initiate an Internet connection. Specifically, the terminal may establish a transmission bearer through a PDP Context activation process or a PDN connection process and acquire an IP address. After that, the terminal may initiate an information acquisition request to the advertisement policy and charging control function according to the Internet connection, where the information acquisition request is used for acquiring placement requirement information of advertisement content and identification information of a storage space corresponding to the advertisement content. The "identification information of the storage space" herein is used for identifying the storage space of the advertisement content when the advertisement content is stored in an advertisement storage, and may specifically be a URL corresponding to the storage space of the advertisement content when the advertisement content is stored in the advertisement storage.

If the terminal has already established the Internet connection in 801, the process may directly proceed to 803.
803: Receive the placement requirement information of the advertisement content and the identification information of the storage space corresponding to the advertisement content which are sent by the advertisement policy and charging control function.

The terminal may receive the placement requirement information of the advertisement content and the identification information of the storage space corresponding to the advertisement content which are sent by the advertisement policy and charging control function.

The terminal may receive and store in advance placement requirement information of a plurality pieces of advertisement content and identification information of a storage space corresponding to the advertisement content.
804: Acquire data to be fed back to a user, where the data includes at least one kind of text, picture, audio, and video.

The terminal may acquire data to be fed back to a user, where the data to be fed back to the user may be data that the user requests to access, and may specifically be at least one kind of text, picture, audio, and video.
805: Perform deep packet inspection on the data so as to acquire attribute information of the data, where the attribute information includes at least one item of a keyword, a source, a destination, and personal information of the user.

After the terminal acquires the data to be fed back to the user, the terminal may perform DPI (Deep packet inspection, deep packet inspection) on the data so as to inspect content of the data, thereby acquiring attribute information of the data, where the attribute information may include at least one item of a keyword, a source, a destination, and personal information of the user. The keyword of the data refers to a keyword in text content or a title of the data; the source of the data refers to a source IP address of the data, or a region corresponding to a website corresponding to a URL of the data; the destination of the data refers to a region corresponding to an IP address of a user who requests the data. The attribute information may further include part of content of the data, or personal information of the user obtained by analyzing the IP address of the user who requests the data, such as age, gender, and profession of the user.
806: When the attribute information of the data satisfies one or more items of a matching keyword, a placement area, placement object information, and a placement time segment in the placement requirement information of the advertisement content, acquire the advertisement content from the advertisement storage according to the identification information of the storage space corresponding to the advertisement content.

The terminal determines whether the attribute information of the data satisfies one or more items of a matching keyword, a placement area, a placement object feature, and a placement time segment in placement requirement information of a certain piece of advertisement content; if a determination result is yes, the advertisement insertion device acquires the advertisement content from the advertisement storage according to the identification information of the storage space corresponding to the advertisement content. Specifically, that the terminal determines that the attribute information of the data to be fed back to the user satisfies one or more items of the matching keyword, the placement area, the placement object feature, and the placement time segment in the placement requirement information includes one or more of the following situations:
determining that data acquisition time in the attribute information of the data to be fed back to the user satisfies the placement time segment in the placement requirement information, where for example, if time acquisition time when the user requests the data is 22:31, and a placement time segment of an advertisement is 22:00 to 24:00 every day, the data acquisition time in the attribute information satisfies the placement time segment in the placement requirement information;
determining that the keyword in the attribute information of the data to be fed back to the user satisfies the matching keyword in the placement requirement information, where for example, if a keyword of the data requested by the user includes beauty, perfume, and alcohol, and the matching keyword in the placement requirement information includes perfume, the keyword in the attribute information satisfies the matching keyword in the placement requirement information;
determining that one or both of the source and destination in the attribute information of the data to be fed back to the user satisfy the placement area in the placement requirement information, where for example, if a region corresponding to the IP address of the user is Beijing, and the placement area in the placement requirement information is Beijing or Shanghai, the destination in the attribute information satisfies the placement area in the placement requirement information; and
determining that the personal information of the user in the attribute information of the data to be fed back to the user satisfies the placement object information in the placement requirement information, where for example, if personal information of the user includes female and 26 years old, and the placement object information in the placement requirement information is female above 15 years old, the personal information of the user in the attribute information satisfies the placement object information in the placement requirement information.

In this case, the terminal acquires the advertisement content from the advertisement storage according to the identification information of the storage space corresponding to the advertisement content. For example, in this embodiment, if the identification information of the storage space is a URL of the storage space in the advertisement storage, the terminal may request the advertisement content from the advertisement storage by using an HTTP GET command or in an FTP manner; if the identification information of the storage space is a set of code words or character strings, the terminal may first send an advertisement content acquisition request to the advertisement storage, where the advertisement content acquisition request carries the identification information of the storage space, and subsequently, the terminal receives the URL of the storage space fed back by the advertisement storage, and then performs the step of acquiring the advertisement content from the advertisement storage.
807: Insert the acquired advertisement content into the data.

The terminal inserts the acquired advertisement content into the data requested by the user. Specifically, when the data requested by the user is a web page, the terminal may insert the advertisement content into the beginning part, the end part, and two side parts of the web page; when the data requested by the user is video, the terminal may insert the advertisement content into the beginning, the middle, or the end of the video, and may choose an insertion manner of covering an entire display area of the video or covering a partial display area of the video.

After the advertisement content is inserted, the terminal may record related data of the current advertisement insertion process, so as to facilitate subsequent query and statistics.
808: Feed back the data to the user.

After the advertisement content is inserted, the terminal feeds back the data in which the advertisement content is inserted to the user. Specifically, the terminal may display the data in which the advertisement content is inserted on an entire or a partial area of the screen.

It should be noted that, in order to reduce time from a moment the terminal requests the data to a moment the data is acquired, in 806, the part of acquiring the advertisement content from the advertisement storage according to the identification information of the storage space may be performed before 804. In this case, before the user requests data, the terminal may acquire at least one piece of advertisement content from the advertisement storage and store the advertisement content locally, and then in step 806, directly selects one of locally stored advertisements for insertion. That is to say, the advertisement content inserted in 806 is advertisement content requested by the terminal in advance or in real time from the advertisement storage according to the identification information of the storage space. In this embodiment, that the terminal requests the advertisement content from the advertisement storage according to the identification information of the storage space in real time is taken as an example for description; however, the terminal may also request the advertisement content from the advertisement storage according to the identification information of the storage space in advance. Moreover, the step of acquiring the advertisement content by the terminal from the advertisement storage according to the identification information of the storage space may also be triggered by reception of the preset SMS message sent by the advertisement policy and charging control function.

In summary, in the advertisement insertion method provided by this embodiment, the terminal inserts an advertisement according to whether the data requested by the user satisfies the placement requirement information which is of the advertisement content and is provided by the advertisement policy and charging control function, thereby solving a problem in the prior art that advertisement insertion mainly relies on a server in the Internet and an advertisement cannot be inserted if a terminal does not request data from the server, and achieving an effect that an advertisement can be inserted when a terminal accesses any server in the Internet. In addition, even if the terminal does not access the Internet, the terminal still can receive the preset short information sent by the advertisement policy and charging control function to trigger a process of acquiring the advertisement content and related information, thereby solving a problem in the prior art that a terminal cannot obtain advertisement content when the terminal does not actively access the Internet, and achieving an effect that even if a terminal does not access the Internet initially, the terminal still can obtain latest advertisement content and related information in time.

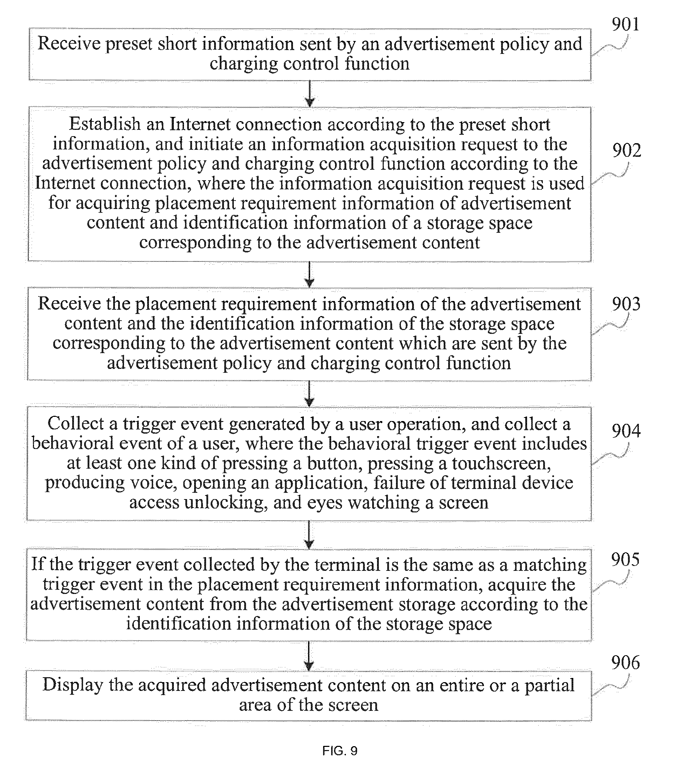

Referring to FIG. 9, FIG. 9 shows a method flow chart of an advertisement insertion method provided by still another embodiment of the present invention. This embodiment is described by using an example in which the advertisement insertion method is applied in a terminal shown in FIG. 1. The advertisement insertion method includes the following steps:
901: Receive preset short information sent by an advertisement policy and charging control function.

After a terminal establishes a PDN connection through a PGW or a GGSN to access the Internet, the terminal may directly receive placement requirement information of advertisement content and identification information of a storage space corresponding to the advertisement content which are sent by the advertisement policy and charging control function. However, different from an advertisement insertion device, the terminal is not always accessing the Internet, so when the terminal does not access the Internet initially, the terminal may first receive preset SMS (Short Messaging Service, short messaging service) information sent by the advertisement policy and charging control function. The preset SMS may be information predetermined by the advertisement policy and charging control function and the terminal.
902: Establish an Internet connection according to the preset short information, and initiate an information acquisition request to the advertisement policy and charging control function according to the Internet connection, where the information acquisition request is used for acquiring placement requirement information of advertisement content and identification information of a storage space corresponding to the advertisement content.

After receiving the preset SMS information, the terminal may actively initiate an Internet connection. Specifically, the terminal may establish a transmission bearer through a PDP Context activation process or a PDN connection process and acquire an IP address. After that, the terminal may initiate an information acquisition request to the advertisement policy and charging control function according to the Internet connection, where the information acquisition request is used for acquiring placement requirement information of advertisement content and identification information of a storage space corresponding to the advertisement content. The "identification information of the storage space" herein is used for identifying the storage space of the advertisement content when the advertisement content is stored in an advertisement storage, and may specifically be a URL corresponding to the storage space of the advertisement content when the advertisement content is stored in the advertisement storage.

If the terminal has already established the Internet connection in 901, the process may directly proceed to 903.
903: Receive the placement requirement information of the advertisement content and the identification information of the storage space corresponding to the advertisement content which are sent by the advertisement policy and charging control function.

The terminal may receive the placement requirement information of the advertisement content and the identification information of the storage space corresponding to the advertisement content which are sent by the advertisement policy and charging control function.

The terminal may receive and store in advance placement requirement information of a plurality pieces of advertisement content and identification information of a storage space corresponding to the advertisement content.
904: Collect a trigger event generated by a user operation, where the trigger event includes at least one kind of pressing a button, pressing a touchscreen, producing voice, opening an application, and failure of terminal device access unlocking.

The terminal may collect the trigger event of the user, where the trigger event includes at least one kind of pressing a button, pressing a touchscreen, producing voice, opening an application, and failure of terminal device access unlocking. The pressing a button refers to that the user presses a certain button of the terminal, presses a certain button at a particular moment, presses a plurality of buttons according to a particular rule, and so on; the pressing a touchscreen refers to that the user clicks, double clicks, draws a particular track on, or makes a gesture on the touchscreen; the opening an application refers to that the user opens a certain application or a certain function in a certain application running on the terminal; the producing voice refers to that the terminal collects sound of the user via a microphone and analyzes the sound to determine whether the voice includes a keyword and the like; the failure of terminal access unlocking refers to a behavioral event of failed unlocking that occurs when the user performs access unlocking on the terminal by means of a slide track, inputting a password, face recognition, and dragging a touch element to a preset screen area, and so on.

The trigger event includes, but is not limited to, the foregoing events, and may be any event that the terminal can collect; for example, the trigger event may also be two eyes gazing at the screen, where the two eyes gazing at the screen refers to that the terminal collects an image of the user via a camera and analyzes the image to determine whether the user is watching the screen at present.

For example, in a specific application environment, the terminal is a smart phone having a front camera and a touchscreen; the smart phone needs to recognize a face image collected by the front camera in real time, and terminal access unlocking is not completed until the recognition is successful. After the smart phone performs recognition on a frame of face image collected by the front camera, if the recognition fails, the smart phone triggers a subsequent step so as to insert an advertisement. In this case, the advertisement can be inserted, and moreover, continuous or frequent events of failure of terminal access unlocking are effectively reduced.

For another example, in a specific application environment, the terminal is glasses which have a camera and can display content. The glasses need to recognize a pupil image collected by the camera in real time, and terminal access unlocking is not completed until the recognition is successful. After the glasses perform recognition on a frame of pupil image collected by the camera in real time, if the recognition fails, the glasses trigger a subsequent step so as to insert an advertisement.
905: If the trigger event collected by the terminal is the same as the matching trigger event in the placement requirement information, acquire the advertisement content from the advertisement storage according to the identification information of the storage space.

When the trigger event collected by the terminal is the same as a matching trigger event in placement requirement information of one piece of advertisement content, the terminal acquires the advertisement content from the advertisement storage according to identification information of a storage space corresponding to the advertisement content. The matching trigger event also includes at least one kind of pressing a button, pressing a touchscreen, receiving a voice signal, opening an application, and failure of terminal access unlocking.
906: Display the acquired advertisement content on an entire or a partial area of the screen.

The terminal may display the acquired advertisement content on the entire or the partial area of the screen.

It should be noted that, in order to display the advertisement content on the entire or the partial area of the screen more quickly, in 905, the part that the terminal acquires the advertisement content from the advertisement storage according to the identification information of the storage space may be performed before 904. In this case, before collecting a behavioral event of the user, the terminal may acquire at least one piece of advertisement content from the advertisement storage and store the advertisement content locally, and then in 905, directly selects one of locally stored advertisements for insertion. That is to say, the advertisement content inserted in 906 is advertisement content requested by the terminal in advance or in real time from the advertisement storage according to the identification information of the storage space. In this embodiment, that the terminal requests the advertisement content from the advertisement storage according to the identification information of the storage space in real time is taken as an example for description; however, the terminal may also request the advertisement content from the advertisement storage according to the identification information of the storage space in advance. Moreover, the step of acquiring the advertisement content by the terminal from the advertisement storage according to the identification information of the storage space may also be triggered by reception of the preset SMS message sent by the advertisement policy and charging control function.

In summary, in the advertisement insertion method provided by this embodiment, the terminal inserts the advertisement according to whether the trigger event triggered by the user operation satisfies the placement requirement information which is of the advertisement content and is provided by the advertisement policy and charging control function, thereby solving a problem in the prior art that advertisement insertion mainly relies on a server in the Internet and an advertisement cannot be inserted if a terminal does not request data from the server, and achieving an effect that an advertisement can be inserted when a terminal does not access the Internet. In addition, even if the terminal does not access the Internet, the terminal still can receive the preset short information sent by the advertisement policy and charging control function to trigger a process of acquiring the advertisement content and related information, thereby solving a problem in the prior art that a terminal cannot obtain advertisement content when the terminal does not actively access the Internet, and achieving an effect that even if a terminal does not access the Internet initially, the terminal still can obtain latest advertisement content and related information in time.

The following are apparatus embodiments of the present invention, which may be used for performing the method embodiments of the present invention. For technical details not disclosed in the apparatus embodiments of the present invention, refer to the method embodiments of the present invention.

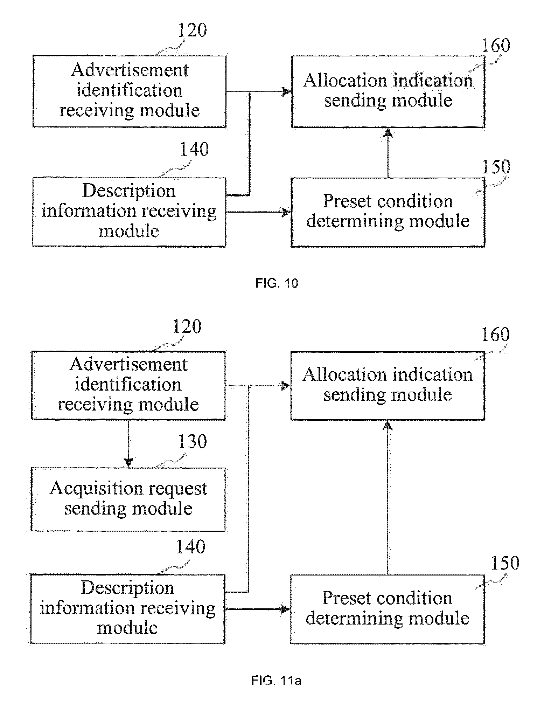

Referring to FIG. 10, FIG. 10 shows a structural block diagram of an advertisement policy and charging control function provided by an embodiment of the present invention, where the advertisement policy and charging control function includes: an advertisement identification receiving module 120, a description information receiving module 140, and an allocation indication sending module 160.

The advertisement identification receiving module 120 is configured to receive identification information which is of advertisement content and is sent by an advertisement providing device.

The description information receiving module 140 is configured to receive description information which is of the advertisement content and is sent by the advertisement providing device, where the description information of the advertisement content includes at least size information of the advertisement content.

The preset condition determining module 150 is configured to determine that the description information which is of the advertisement content and is received by the description information receiving module 140 satisfies a preset condition.

The allocation indication sending module 160 is configured to, if the preset condition determining module 150 determines that the description information of the advertisement content satisfies the preset condition, send, to an advertisement storage, a space allocation indication carrying the identification information which is of the advertisement content and is received by the advertisement identification receiving module 120 and the size information which is of the advertisement content and is received by the description information receiving module 140, so that the advertisement storage allocates a corresponding storage space to the advertisement content according to the identification information and the size information of the advertisement content, and that the advertisement storage requests the advertisement content from the advertisement providing device according to the identification information of the advertisement content and stores the advertisement content in the storage space; or configured to, if the preset condition determining module 150 determines that the description information of the advertisement content satisfies the preset condition, send, to an advertisement storage, a space allocation indication carrying the identification information which is of the advertisement content and is received by the advertisement identification receiving module 120 and the size information which is of the advertisement content and is received by the description information receiving module 140, so that the advertisement storage allocates a corresponding storage space to the advertisement content according to the identification information and the size information of the advertisement content, generates identification information of the storage space, and sends the identification information of the storage space to the advertisement providing device, so as to receive the advertisement content pushed according to the identification information of the storage space by the advertisement providing device to the storage space, and store the advertisement content.

In summary, the advertisement policy and charging control function provided by this embodiment receives the identification information and the description information which are of the advertisement content and are sent by the advertisement providing device, and further determines whether to store an advertisement according to whether the description information of the advertisement content satisfies the preset condition, thereby solving a problem in the prior art that it takes a long time to manually determine whether to store an advertisement, and achieving an effect that whether to store an advertisement can be determined without relying on manual labor.

For further detailed description of the advertisement policy and charging control function provided in the previous embodiment, refer to FIG. 11a, where FIG. 11a shows a structural block diagram of an advertisement policy and charging control function provided by another embodiment of the present invention. Different from the previous embodiment, the advertisement policy and charging control function not only includes: an advertisement identification receiving module 120, a description information receiving module 140, a preset condition determining module, and an allocation indication sending module 160, but also includes an acquisition request sending module 130.

The advertisement identification receiving module 120 is configured to receive identification information which is of advertisement content and is sent by an advertisement providing device.

The acquisition request sending module 130 is configured to send a description information acquisition request to the advertisement providing device according to the identification information which is of the advertisement content and is received by the advertisement identification receiving module 120, so as to trigger the advertisement providing device to send description information of the advertisement content.

The description information receiving module 140 is configured to, after the acquisition request sending module 130 sends the description information acquisition request, receive the description information which is of the advertisement content and is sent by the advertisement providing device, where the description information of the advertisement content includes at least size information of the advertisement content.

The preset condition determining module 150 is configured to determine that the description information which is of the advertisement content and is received by the description information receiving module 140 satisfies a preset condition.

The allocation indication sending module 160 is configured to, if the preset condition determining module 150 determines that the description information of the advertisement content satisfies the preset condition, send, to an advertisement storage, a space allocation indication carrying the identification information which is of the advertisement content and is received by the advertisement identification receiving module 120 and the size information which is of the advertisement content and is received by the description information receiving module 140.

The description information which is of the advertisement content and is received by the description information receiving module 140 includes at least size information of the advertisement content, and the preset condition determining module 150 is specifically configured to determine that a value in the size information of the advertisement content is smaller than a preset threshold.

The description information which is of the advertisement content and is received by the description information receiving module 140 not only includes the size information of the advertisement content, but also includes one or more items of type information, resolution information, encoding information, a language type, and placement requirement information of the advertisement content, and that the preset condition determining module 150 is specifically configured to determine that the description information of the advertisement content satisfies the preset condition includes one or more of the following situations:
determining that a type in the type information of the advertisement content satisfies a preset type, where the preset type includes one or more kinds of text, image, audio, and video;
determining that resolution in the resolution information of the advertisement content is smaller than or equal to preset resolution;
determining that an encoding rule in the encoding information of the advertisement content satisfies a preset encoding rule;
determining that a language in the language information of the advertisement content satisfies a preset language; and
determining that a placement requirement in the placement requirement information of the advertisement content satisfies a preset placement requirement.

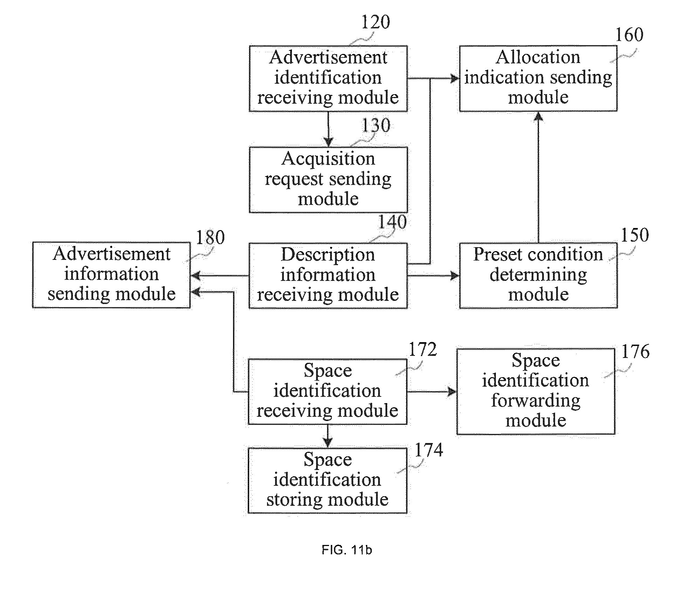

More preferably, in order to facilitate performing of an advertisement insertion process, the advertisement policy and charging control function further includes: a space identification receiving module 172, a space identification storing module 174, and a space identification forwarding module 176, referring to FIG. 11b.

The space identification receiving module 172 is configured to receive identification information of the storage space fed back by the advertisement storage.

The space identification storing module 174 is configured to store the identification information of the storage space received by the space identification receiving module 172, and associate the identification information of the storage space with the identification information and the description information of the corresponding advertisement content.

The space identification forwarding module 176 is configured to forward the identification information of the storage space received by the space identification receiving module 174 to the advertisement providing device, so that the advertisement providing device pushes the advertisement content to the storage space according to the identification information of the storage space.

It should be noted that, if the advertisement storage actively requests the advertisement content from the advertisement providing device according to the identification information of the advertisement content, the advertisement policy and charging control function may only include the space identification receiving module 172 and the space identification storing module 174; if the advertisement storage generates identification information of the storage space and sends the identification information of the storage space to the advertisement providing device so as to receive the advertisement content pushed according to the identification information of the storage space by the advertisement providing device to the storage space, the advertisement policy and charging control function may include the space identification receiving module 172, the space identification storing module 174, and the space identification forwarding module 176.

The description information which is of the advertisement content and is received by the description information receiving module 140 includes placement requirement information of the advertisement content, and the advertisement policy and charging control function further includes an advertisement information sending module 180, referring to FIG. 11b. The advertisement information sending module 180 is configured to send, to an advertisement insertion device or a terminal, the placement requirement information which is of the advertisement content and is received by the description information receiving module 140 and the identification information which is of the storage space corresponding to the advertisement content and is received by the space identification receiving module 172.

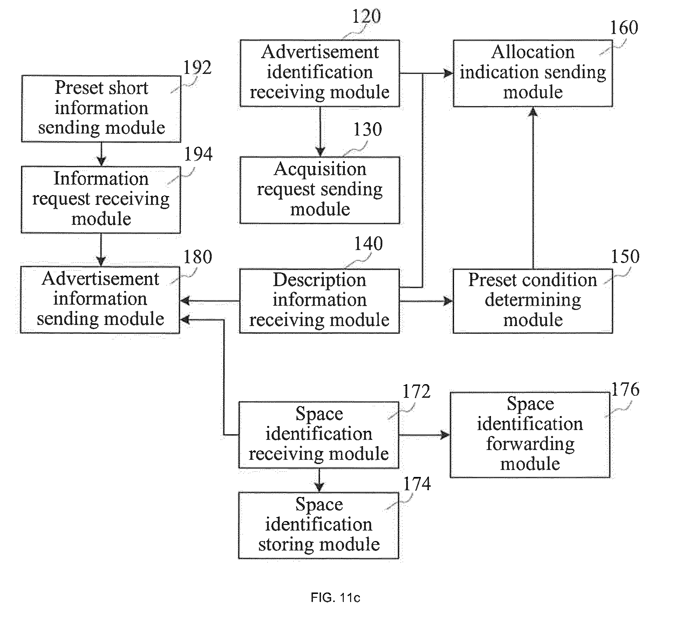

When the advertisement information sending module 180 is configured to send, to the terminal, the placement requirement information of the advertisement content and the identification information of the storage space corresponding to the advertisement content, because the terminal is not always accessing the Internet, the advertisement policy and charging control function may further include: a preset short information sending module 192 and an information request receiving module 194, referring to FIG. 11 c.

The preset short information sending module 192 is configured to send preset short information to the terminal, so that the terminal establishes an Internet connection after receiving the preset short information.

The information request receiving module 194 is configured to, after the preset short information sending module 192 sends the preset short information, receive an information acquisition request sent by using the Internet connection by the terminal, where the information acquisition request is used for requesting the placement requirement information of the advertisement content and/or the identification information of the storage space corresponding to the advertisement content.

In summary, the advertisement policy and charging control function provided by this embodiment receives the identification information and the description information which are of the advertisement content and are sent by the advertisement providing device, and further determines according to whether the description information of the advertisement content satisfies a preset condition, whether to store an advertisement, thereby solving a problem in the prior art that it takes a long time to manually determine whether to store an advertisement, and achieving an effect that whether to store an advertisement can be determined without relying on manual labor; moreover, the advertisement policy and charging control function sends preset short information to the terminal to trigger the terminal to establish an Internet connection so as to actively acquire related information of the advertisement content from the advertisement policy and charging control function, thereby solving a problem in the prior art that a terminal cannot obtain advertisement content when the terminal does not actively access the Internet, and achieving an effect that even if a terminal does not access the Internet initially, the terminal still can obtain latest advertisement content and related information in time.

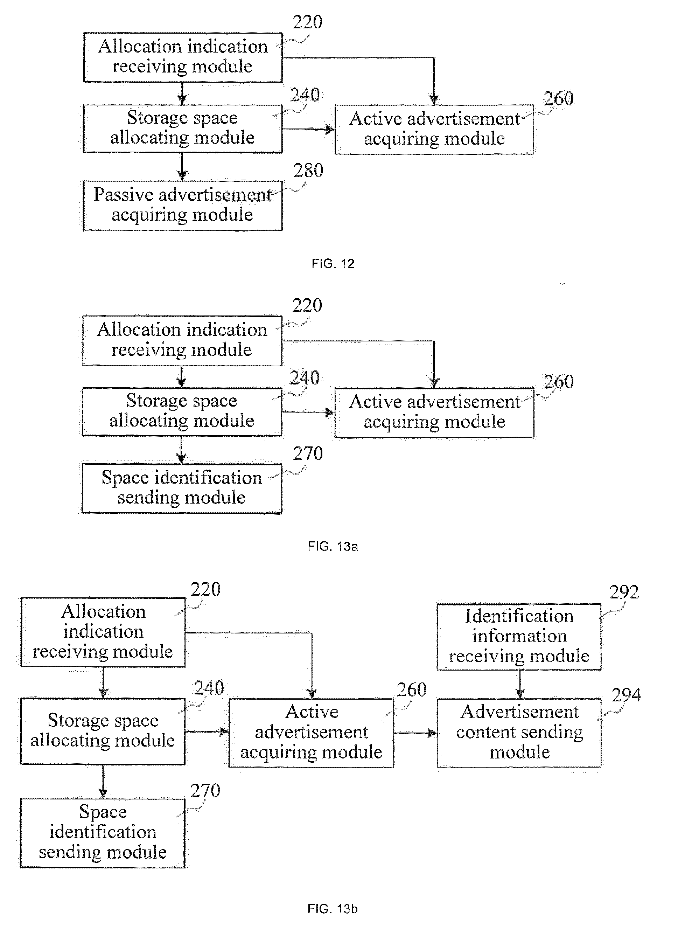

Referring to FIG. 12, FIG. 12 shows a structural block diagram of an advertisement storage provided by an embodiment of the present invention. The advertisement storage includes an allocation indication receiving module 220, a storage space allocating module 240, and any one of an active advertisement acquiring module 260 and a passive advertisement acquiring module 280.

The allocation indication receiving module 220 is configured to receive a space allocation indication carrying identification information and size information of advertisement content, where the space allocation indication is sent by an advertisement policy and charging control function when information included in description information of the advertisement content satisfies a preset condition, and the description information of the advertisement content includes at least the size information of the advertisement content.

The storage space allocating module 240 is configured to allocate a corresponding storage space to the advertisement content according to the identification information and the size information which are of the advertisement content and are received by the allocation indication receiving module 220.

The active advertisement acquiring module 260 is configured to request the advertisement content from an advertisement providing device according to the identification information which is of the advertisement content and is received by the allocation indication module 220, receive the advertisement content and store the advertisement content in the storage space.

The passive advertisement acquiring module 280 is configured to generate identification information of the storage space allocated by the allocation indication receiving module 220 and provide the identification information of the storage space for the advertisement providing device, so that the advertisement providing device pushes the advertisement content to the storage space according to the identification information of the storage space; and receive and store the advertisement content.

In summary, the advertisement storage provided by this embodiment automatically requests the advertisement content from the advertisement providing device according to the identification information of the advertisement content, or automatically receives the advertisement content pushed by the advertisement providing device, thereby solving defects in the prior art that it takes a long time to store an advertisement because advertisement content is provided for a storage mainly by using a communication tool such as an email or an instant messaging program, and that storing of the advertisement is low in efficiency because the storing is mainly completed manually, and achieving an effect that an advertisement storage can automatically complete an advertisement storing process.

For further detailed description of the advertisement storage provided by the previous embodiment, refer to FIG. 13a, where FIG. 13a shows a structural block diagram of an advertisement storage provided by another embodiment of the present invention. The advertisement storage includes an allocation indication receiving module 220, a storage space allocating module 240, an active advertisement acquiring module 260, and a space identification sending module 270.

The allocation indication receiving module 220 is configured to receive a space allocation indication carrying identification information and size information which are of advertisement content, where the space allocation indication is sent by an advertisement policy and charging control function when information included in description information of the advertisement content satisfies a preset condition, and the description information of the advertisement content includes at least the size information of the advertisement content.

The storage space allocating module 240 is configured to allocate a corresponding storage space to the advertisement content according to the identification information and the size information which are of the advertisement content and are received by the allocation indication receiving module 220.

The active advertisement acquiring module 260 is configured to request the advertisement content from the advertisement providing device according to the identification information which is of the advertisement content and is received by the allocation indication receiving module 220, receive the advertisement content and store the advertisement content in the storage space.

The space identification sending module 270 is configured to generate identification information of the storage space allocated by the storage space allocating module 240, and send the identification information of the storage space to the advertisement policy and charging control function, so that the advertisement policy and charging control function stores the identification information of the storage space, and associates the identification information of the storage space with the identification information and the description information which are of the corresponding advertisement content.

In order to facilitate performing of an advertisement insertion process, the advertisement storage may further include: an identification information receiving module 292 and an advertisement content sending module 294, referring to FIG. 13b.

The identification information receiving module 292 is configured receive the identification information of the storage space sent by an advertisement insertion device or a terminal.

The advertisement content sending module 294 is configured to send, to the advertisement insertion device or the terminal, the advertisement content stored in the storage space corresponding to the identification information received by the identification information receiving module 292. The advertisement content is advertisement content acquired by the active advertisement acquiring module 260.

In summary, the advertisement storage provided by this embodiment automatically requests the advertisement content from the advertisement providing device according to the identification information of the advertisement content, thereby solving defects in the prior art that it takes a long time to store an advertisement because advertisement content is provided for a storage mainly by using a communication tool such as an email or an instant messaging program, and that storing of the advertisement is low in efficiency because the storing is mainly completed manually, and achieving an effect that an advertisement storage can automatically complete an advertisement storing process. The active advertisement acquiring module actively requests the advertisement content from the advertisement providing device, and therefore, when a great deal of advertisement content is stored, the advertisement storage may choose, according to its load, a moment for actively requesting the advertisement content, which helps reducing processing pressure of the advertisement storage during peak time.

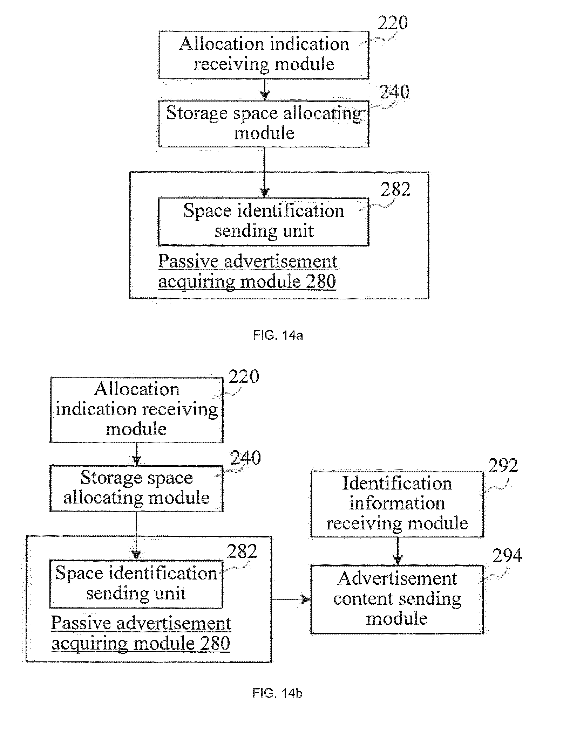

For further detailed description of the advertisement storage provided by the embodiment corresponding to FIG. 12, refer to FIG. 14a, where FIG. 14a shows a structural block diagram of an advertisement storage provided by another embodiment of the present invention. The advertisement storage includes an allocation indication receiving module 220, a storage space allocating module 240, and a passive advertisement acquiring module 280.

The allocation indication receiving module 220 is configured to receive a space allocation indication carrying identification information and size information which are of advertisement content, where the space allocation indication is sent by an advertisement policy and charging control function when information included in description information of the advertisement content satisfies a preset condition, and the description information of the advertisement content includes at least the size information of the advertisement content.

The storage space allocating module 240 is configured to allocate a corresponding storage space to the advertisement content according to the identification information and the size information which are of the advertisement content and are received by the allocation indication receiving module 220.

The passive advertisement acquiring module 280 is configured to generate identification information of the storage space allocated by the storage space allocating module 240 and provide the identification information of the storage space for an advertisement providing device, so that the advertisement providing device pushes the advertisement content to the storage space according to the identification information of the storage space; and receive and store the advertisement content.

Specifically, the passive advertisement acquiring module 280 further includes:
a space identification sending unit 282, configured to generate identification information of the storage space allocated by the storage space allocating module 240, and send the identification information of the storage space to the advertisement policy and charging control function, so that the advertisement policy and charging control function stores the identification information of the storage space, and associates the identification information of the storage space with the identification information and the description information which are of the advertisement content, and forwards the identification information of the storage space to the advertisement providing device, so that the advertisement providing device pushes the advertisement content to the storage space according to the identification information of the storage space.

In order to facilitate performing of an advertisement insertion process, the advertisement storage may further include: an identification information receiving module 292 and an advertisement content sending module 294, referring to FIG. 14b.

The identification information receiving module 292 is configured receive the identification information of the storage space sent by an advertisement insertion device or a terminal.

The advertisement content sending module 292 is configured to send, to the advertisement insertion device or the terminal, the advertisement content stored in the storage space corresponding to the identification information received by the identification information receiving module 292. The advertisement content is advertisement content acquired by the passive advertisement acquiring module 280.

In summary, compared with the previous embodiment, the advertisement providing device pushes the advertisement content to the advertisement storage, so that part of signaling and procedures are processed by the advertisement providing device instead of the advertisement storage during a storing process of the advertisement content, thereby saving signaling and reducing processing pressure of the advertisement storage.

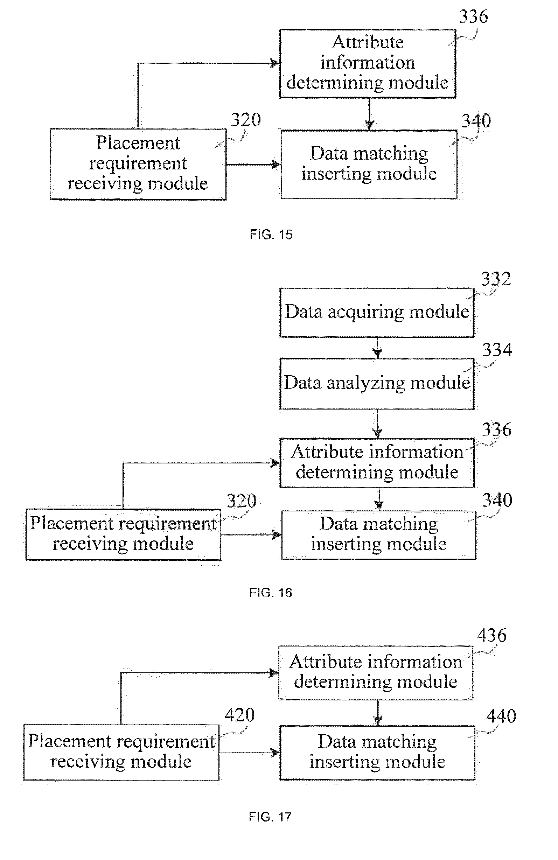

Referring to FIG. 15, FIG. 15 shows a structural block diagram of an advertisement insertion device provided by an embodiment of the present invention. The advertisement insertion device is used in a network element device via which a terminal accesses the Internet. The advertisement insertion device includes a placement requirement receiving module 320, an attribute information determining module 336, and a data matching insertion module 340.

The placement requirement receiving module 320 is configured to receive placement requirement information of advertisement content and identification information of a storage space corresponding to the advertisement content which are sent by an advertisement policy and charging control function, where the placement requirement information includes one or more items of a matching keyword, a placement area, placement object information, and a placement time segment.

The attribute information determining module 336 is configured to determine that attribute information of data to be fed back to a user satisfies one or more items of the matching keyword, the placement area, the placement object information, and the placement time segment in the placement requirement information received by the placement requirement receiving module 320.

The data matching insertion module 340 is configured to insert the advertisement content into the data after the attribute information determining module 336 determines that the attribute information of the data to be fed back to the user satisfies one or more items of the matching keyword, the placement area, the placement object information, and the placement time segment in the placement requirement information, where the advertisement content is advertisement content requested in advance or in real time from an advertisement storage according to the identification information of the storage space received by the placement requirement receiving module.

The attribute information determined by the attribute information determining module 336 includes one or more items of data acquisition time, a keyword, a source, a destination, and personal information of the user.

That the attribute information determining module 336 is configured to determine the attribute information of the data to be fed back to the user specifically includes one or more of the following situations:
determining that the data acquisition time in the attribute information satisfies the placement time segment in the placement requirement information;
determining that the keyword in the attribute information satisfies the matching keyword in the placement requirement information;
determining that one or both of the source and the destination in the attribute information satisfy the placement area in the placement requirement information; and
determining that the personal information of the user in the attribute information satisfies the placement object information in the placement requirement information.

In summary, the advertisement insertion device provided by this embodiment inserts an advertisement according to whether the data requested by the user satisfies the placement requirement information of the advertisement content provided by the advertisement policy and charging control function, thereby solving a problem in the prior art that advertisement insertion mainly relies on a server in the Internet and an advertisement cannot be inserted if a terminal does not request data from the server, and achieving an effect that an advertisement insertion device can insert an advertisement when a terminal accesses any server in the Internet.

For further detailed description of the advertisement insertion device provided by the previous embodiment, refer to FIG. 6, where FIG. 16 shows a structural block diagram of an advertisement insertion device provided by another embodiment of the present invention. The advertisement insertion device is used in a network element device via which a terminal accesses the Internet. The advertisement insertion device includes a placement requirement receiving module 320, a data acquiring module 332, a data analyzing module 334, an attribute information determining module 336, and a data matching insertion module 340.

The placement requirement receiving module 320 is configured to receive placement requirement information of advertisement content and identification information of a storage space corresponding to the advertisement content which are sent by an advertisement policy and charging control function, where the placement requirement information includes one or more items of a matching keyword, a placement area, placement object information, and a placement time segment.

The data acquiring module 332 is configured to acquire data to be fed back to a user, where the data includes at least one kind of text, picture, audio, and video.

The data analyzing module 334 is configured to perform deep packet inspection on the data acquired by the data acquiring module 332 so as to obtain attribute information of the data.

The attribute information determining module 336 is configured to determine that the attribute information of the data to be fed back to the user satisfies one or more items of the matching keyword, the placement area, the placement object information, and the placement time segment in the placement requirement information.

The data matching insertion module 340 is configured to insert the advertisement content into the data after the attribute information determining module 336 determines that the attribute information of the data to be fed back to the user satisfies one or more items of the matching keyword, the placement area, the placement object information, and the placement time segment in the placement requirement information, where the advertisement content is advertisement content requested in advance or in real time from an advertisement storage according to the identification information of the storage space received by the placement requirement receiving module 320.

The attribute information analyzed by the data analyzing module 334 includes one or more items of data acquisition time, a keyword, a source, a destination, and personal information of the user.

That the attribute information determining module 336 is configured to determine the attribute information of the data to be fed back to the user specifically includes one or more of the following situations:
determining that the data acquisition time in the attribute information satisfies the placement time segment in the placement requirement information;
determining that the keyword in the attribute information satisfies the matching keyword in the placement requirement information;
determining that one or both of the source and the destination in the attribute information satisfy the placement area in the placement requirement information; and
determining that the personal information of the user in the attribute information satisfies the placement object information in the placement requirement information.

In summary, the advertisement insertion device provided by this embodiment inserts an advertisement according to whether the data requested by the user satisfies the placement requirement information of the advertisement content provided by the advertisement policy and charging control function, thereby solving a problem in the prior art that advertisement insertion mainly relies on a server in the Internet and an advertisement cannot be inserted if a terminal does not request data from the server, and achieving an effect that an advertisement insertion device can insert an advertisement when a terminal accesses any server in the Internet.

Referring to FIG. 17, FIG. 17 shows a structural block diagram of a terminal provided by an embodiment of the present invention. The terminal includes a placement requirement receiving module 420, an attribute information determining module 436, and a data matching insertion module 440.

The placement requirement receiving module 420 is configured to receive placement requirement information of advertisement content and identification information of a storage space corresponding to the advertisement content which are sent by an advertisement policy and charging control function, where the placement requirement information includes one or more items of a matching keyword, a placement area, placement object information, and a placement time segment.

The attribute information determining module 436 is configured to determine that attribute information of data to be fed back to a user satisfies one or more items of the matching keyword, the placement area, the placement object information, and the placement time segment in the placement requirement information received by the placement requirement receiving module 420.

The data matching insertion module 440 is configured to insert the advertisement content into the data after the attribute information determining module 436 determines that the attribute information of the data to be fed back to the user satisfies one or more items of the matching keyword, the placement area, the placement object information, and the placement time segment in the placement requirement information, where the advertisement content is advertisement content requested in advance or in real time from an advertisement storage according to the identification information of the storage space.

The attribute information determined by the attribute information determining module 436 includes one or more items of data acquisition time, a keyword, a source, a destination, and personal information of the user.

That the attribute information determining module 436 is configured to determine the attribute information of the data to be fed back to the user includes one or more of the following situations:
determining that the data acquisition time in the attribute information satisfies the placement time segment in the placement requirement information;
determining that the keyword in the attribute information satisfies the matching keyword in the placement requirement information;
determining that one or both of the source and the destination in the attribute information satisfy the placement area in the placement requirement information; and
determining that the personal information of the user in the attribute information satisfies the placement object information in the placement requirement information.

In summary, the terminal provided by this embodiment inserts an advertisement according to whether the data requested by the user satisfies the placement requirement information which is of the advertisement content and is provided by the advertisement policy and charging control function, thereby solving a problem in the prior art that advertisement insertion mainly relies on a server in the Internet and an advertisement cannot be inserted if a terminal does not request data from the server, and achieving an effect that an advertisement can be inserted when a terminal accesses any server in the Internet.

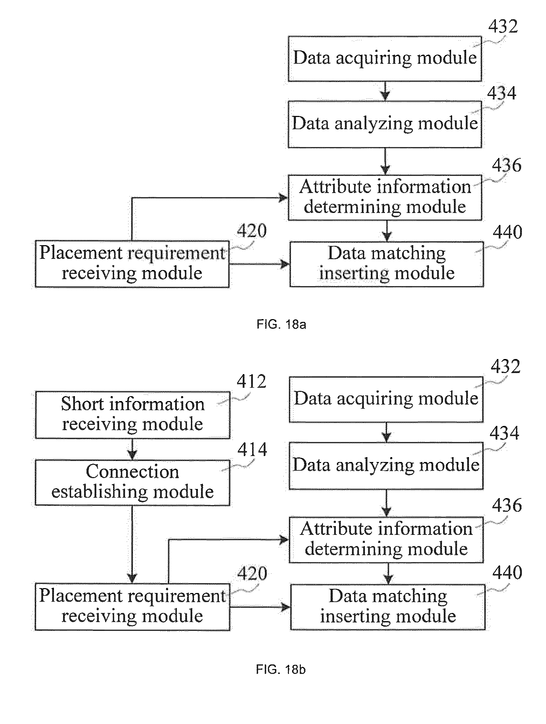

For further detailed description of the terminal provided by the previous embodiment, refer to FIG. 18a, where FIG. 18a shows a structural block diagram of a terminal provided by another embodiment of the present invention. The terminal includes a placement requirement receiving module 420, a data acquiring module 432, an attribute information determining module 436, a data analyzing module 434, and a data matching insertion module 440.

The placement requirement receiving module 420 is configured to receive placement requirement information of advertisement content and identification information of a storage space corresponding to the advertisement content which are sent by an advertisement policy and charging control function, where the placement requirement information includes one or more items of a matching keyword, a placement area, placement object information, and a placement time segment.

The data acquiring module 432 is configured to acquire data to be fed back to a user, where the data includes at least one kind of text, picture, audio, and video.

The data analyzing module 434 is configured to perform deep packet inspection on the data acquired by the data acquiring module 432 so as to obtain attribute information of the data.

The attribute information determining module 436 is configured to determine that attribute information of data to be fed back to a user satisfies one or more items of the matching keyword, the placement area, the placement object information, and the placement time segment in the placement requirement information received by the placement requirement receiving module 420.

The data matching insertion module 440 is configured to insert the advertisement content into the data after the attribute information determining module 436 determines that the attribute information of the data to be fed back to the user satisfies one or more items of the matching keyword, the placement area, the placement object information, and the placement time segment in the placement requirement information, where the advertisement content is advertisement content requested in advance or in real time from an advertisement storage according to the identification information of the storage space.

The attribute information analyzed by the data analyzing module 434 includes one or more items of data acquisition time, a keyword, a source, a destination, and personal information of the user.

That the attribute information determining module 436 is configured to determine the attribute information of the data to be fed back to the user specifically includes one or more of the following situations:
determining that the data acquisition time in the attribute information satisfies the placement time segment in the placement requirement information;
determining that the keyword in the attribute information satisfies the matching keyword in the placement requirement information;
determining that one or both of the source and the destination in the attribute information satisfy the placement area in the placement requirement information; and
determining that the personal information of the user in the attribute information satisfies the placement object information in the placement requirement information.

Because the terminal is not always accessing the Internet, the terminal may further include: a short information receiving module 412 and a connection establishing module 414, referring to FIG. 18b.

The short information receiving module 412 is configured to receive preset short information sent by the advertisement policy and charging control function.

The connection establishing module 414 is configured to establish an Internet connection according to the preset short information received by the short information receiving module 412, so as to acquire, according to the Internet connection, the placement requirement information of the advertisement content, the identification information of the storage space corresponding to the advertisement content, and/or the advertisement content.

In this case, the placement requirement receiving module 420 is specifically configured to receive, according to the Internet connection established by the connection establishing module 414, the placement requirement information of the advertisement content and the identification information of the storage space corresponding to the advertisement content which are sent by the advertisement policy and charging control function, where the placement requirement information includes one or more items of a matching keyword, a placement area, placement object information, and a placement time segment.

In summary, the terminal provided by this embodiment inserts an advertisement according to whether the data requested by the user satisfies the placement requirement information which is of the advertisement content and is provided by the advertisement policy and charging control function, thereby solving a problem in the prior art that advertisement insertion mainly relies on a server in the Internet and an advertisement cannot be inserted if a terminal does not request data from the server, and achieving an effect that an advertisement can be inserted when a terminal accesses any server in the Internet. Moreover, the preset short information is received to trigger the establishment of the Internet connection so as to actively acquire related information of the advertisement content from the advertisement policy and charging control function, thereby solving a problem in the prior art that a terminal cannot obtain advertisement content when the terminal does not actively access the Internet, and achieving an effect that even if a terminal does not access the Internet initially, the terminal still can obtain latest advertisement content and related information in time.

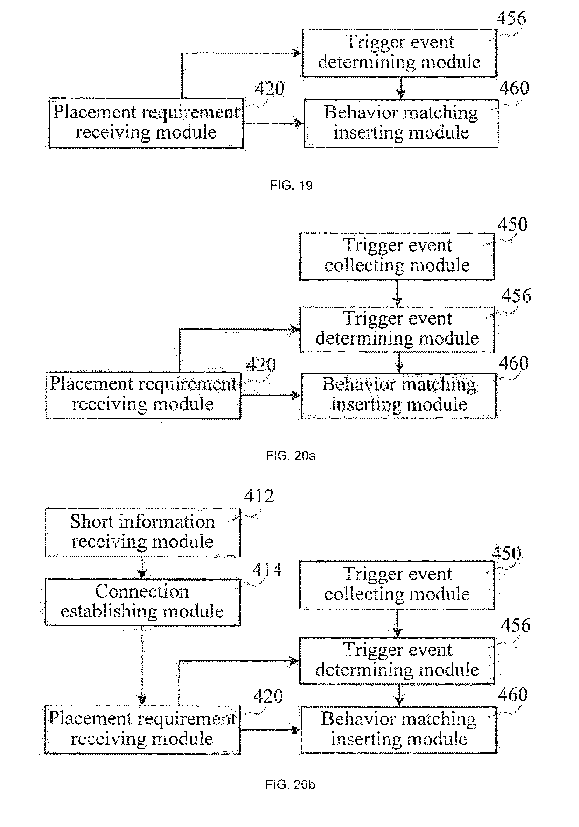

Referring to FIG. 19, FIG. 19 shows a structural block diagram of a terminal provided by an embodiment of the present invention. The terminal includes a placement requirement receiving module 420, a trigger event determining module 456, and a behavior matching insertion module 460.

The placement requirement receiving module 420 is configured to receive placement requirement information of advertisement content and identification information of a storage space corresponding to the advertisement content which are sent by an advertisement policy and charging control function, where the placement requirement information includes a matching trigger event.

The trigger event determining module 456 is configured to determine that a trigger event collected by a terminal is the same as the matching trigger event in the placement requirement information received by the placement requirement receiving module 420.

The behavior matching insertion module 460 is configured to play the advertisement content on a screen of the terminal after the trigger event determining module 456 determines that the trigger event collected by the terminal is the same as the matching trigger event in the placement requirement information, where the advertisement content is advertisement content requested in advance or in real time from an advertisement storage according to the identification information of the storage space received by the placement requirement receiving module 420.

In summary, the terminal provided by this embodiment inserts an advertisement according to whether the trigger event triggered by a user operation satisfies the placement requirement information which is of the advertisement content and is provided by the advertisement policy and charging control function, thereby solving a problem in the prior art that advertisement insertion mainly relies on a server in the Internet and an advertisement cannot be inserted if a terminal does not request data from the server, and achieving an effect that an advertisement can be inserted even when a terminal does not access the Internet.

For further detailed description of the terminal provided by the previous embodiment, refer to FIG. 20a, where FIG. 20a shows a structural block diagram of a terminal provided by another embodiment of the present invention. The terminal includes a placement requirement receiving module 420, a trigger event collecting module 450, a trigger event determining module 456, and a behavior matching insertion module 460.

The placement requirement receiving module 420 is configured to receive placement requirement information of advertisement content and identification information of a storage space corresponding to the advertisement content which are sent by an advertisement policy and charging control function, where the placement requirement information includes a matching trigger event.

The trigger event collecting module 450 is configured to collect a trigger event generated by a user operation. The trigger event includes at least one kind of pressing a button, pressing a touchscreen, receiving a voice signal, opening an application, and failure of terminal access unlocking.

The trigger event determining module 456 is configured to determine that a trigger event collected by a terminal is the same as the matching trigger event in the placement requirement information received by the placement requirement receiving module 420.

The behavior matching insertion module 460 is configured to play the advertisement content on a screen of the terminal after the trigger event determining module 456 determines that the trigger event collected by the terminal is the same as the matching trigger event in the placement requirement information received by the placement requirement receiving module 420, where the advertisement content is advertisement content requested in advance or in real time from an advertisement storage according to the identification information of the storage space received by the placement requirement receiving module 420.

The behavior matching insertion module 460 is further specifically configured to, after the trigger event determining module 456 determines that the trigger event collected by the terminal is the same as the matching trigger event in the placement requirement information, play the advertisement content on an entire or a partial area of the screen of the terminal in a manner of overlapping on or covering original display content.

Because the terminal is not always accessing the Internet, the terminal may further include: a short information receiving module 412 and a connection establishing module 414, referring to FIG. 20b.

The short information receiving module 412 is configured to receive preset short information sent by the advertisement policy and charging control function.

The connection establishing module 414 is configured to establish an Internet connection according to the preset short information received by the short information receiving module 414, so as to acquire, according to the Internet connection, the placement requirement information of the advertisement content, the identification information of the storage space corresponding to the advertisement content, and/or the advertisement content.

In this case, the placement requirement receiving module 420 is specifically configured to receive, according to the Internet connection established by the connection establishing module 414, the placement requirement information of the advertisement content and the identification information of the storage space corresponding to the advertisement content which are sent by the advertisement policy and charging control function, where the placement requirement information includes a matching trigger event.

In summary, the terminal provided by this embodiment inserts an advertisement according to whether the trigger event triggered by a user operation satisfies the placement requirement information which is of the advertisement content and is provided by the advertisement policy and charging control function, thereby solving a problem in the prior art that advertisement insertion mainly relies on a server in the Internet and an advertisement cannot be inserted if a terminal does not request data from the server, and achieving an effect that an advertisement can be inserted even when a terminal does not access the Internet. Moreover, the preset short information is received to trigger the establishment of the Internet connection so as to actively acquire related information of the advertisement content from the advertisement policy and charging control function, thereby solving a problem in the prior art that a terminal cannot obtain advertisement content when the terminal does not actively access the Internet, and achieving an effect that even if a terminal does not access the Internet initially, the terminal still can obtain latest advertisement content and related information in time.

It should be noted that the terminal provided by the embodiment corresponding to FIG. 17 may be combined with the terminal provided by the embodiment corresponding to FIG. 19 or FIG. 20 to form a new embodiment, and the terminal provided by the embodiment corresponding to FIG. 18 may be combined with the terminal provided by the embodiment corresponding to FIG. 19 or FIG. 20 to form a new embodiment.

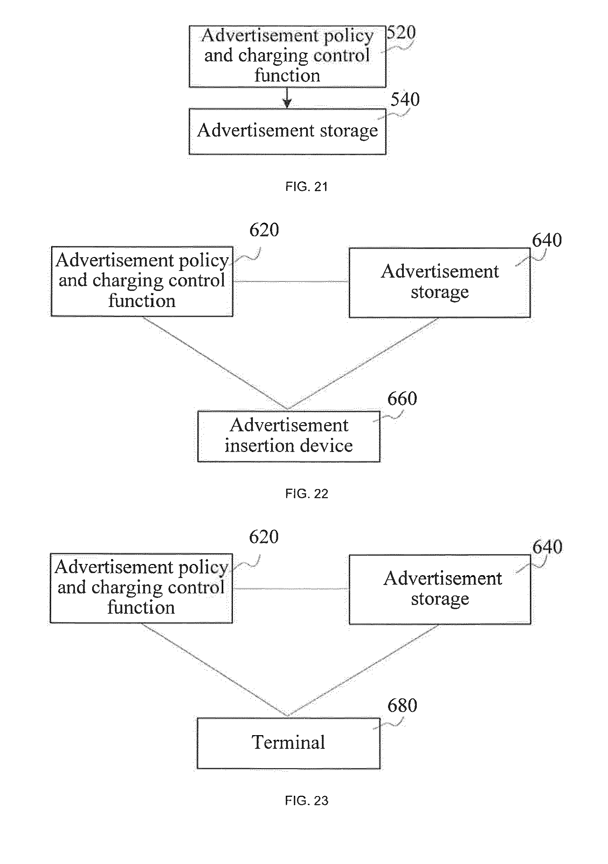

Referring to FIG. 21, FIG. 21 shows a structural block diagram of an advertisement storage system provided by an embodiment of the present invention. The advertisement storage system includes an advertisement policy and charging control function 520 and an advertisement storage 540.

The advertisement policy and charging control function 520 may be an advertisement policy and charging control function provided by the embodiment corresponding to FIG. 10.

The advertisement storage 540 may be an advertisement storage provided by the embodiment corresponding to FIG. 12.

In summary, in the advertisement storage system provided by this embodiment, the advertisement policy and charging control function receives the identification information and the description information which are of the advertisement content and are sent by the advertisement providing device, and further determines, according to whether the description information of the advertisement content satisfies a preset condition, whether to store an advertisement, thereby solving a problem in the prior art that it takes a long time to manually determine whether to store an advertisement, and achieving an effect that whether to store an advertisement can be determined without relying on manual labor. The advertisement storage automatically requests the advertisement content from the advertisement providing device according to the identification information of the advertisement content, or the advertisement storage automatically receives the advertisement content pushed by the advertisement providing device, thereby solving defects in the prior art that it takes a long time to store an advertisement because advertisement content is provided for a storage mainly by using a communication tool such as an email or an instant messaging program, and that storing of the advertisement is low in efficiency because the storing is mainly completed manually, and achieving an effect that an advertisement storage can automatically complete an advertisement storing process.

Referring to FIG. 22, FIG. 22 shows a structural block diagram of an advertisement insertion system provided by an embodiment of the present invention. The advertisement insertion system includes an advertisement policy and charging control function 620, an advertisement storage 640, and an advertisement insertion device 660.

The advertisement policy and charging control function 620 may be an advertisement policy and charging control function provided by the embodiment corresponding to FIG. 11.

The advertisement storage 640 may be an advertisement storage provided by the embodiment corresponding to FIG. 13 or FIG. 14.

The advertisement insertion device 660 may be the advertisement insertion device provided in FIG. 15 or FIG. 16.

In summary, in the advertisement insertion system provided by this embodiment, processes of automatically receiving, storing, and inserting an advertisement can be achieved by the advertisement insertion system including the advertisement policy and charging control function, the advertisement storage, and the advertisement insertion device without any manual intervention by a service provider. Compared with the prior art in which an advertisement storing process and a process of setting an advertisement in an administered server are completed by using a lot of manual labor resources and time resources, not only manual labor resources and time resources can be saved, but also advertisement insertion efficiency can be significantly improved.

Referring to FIG. 23, FIG. 23 shows a structural block diagram of an advertisement insertion system provided by another embodiment of the present invention. The advertisement insertion system includes an advertisement policy and charging control function 620, an advertisement storage 640, and a terminal 680.

The advertisement policy and charging control function 620 may be an advertisement policy and charging control function provided by the embodiment corresponding to FIG. 11.

The advertisement storage 640 may be an advertisement storage provided by the embodiment corresponding to FIG. 13 or FIG. 14.

The terminal 680 may be a terminal provided by the embodiment corresponding to FIG. 17 or FIG. 18.

In summary, in the advertisement insertion system provided by this embodiment, processes of automatically receiving, storing, and inserting an advertisement can be achieved by the advertisement insertion system including the advertisement policy and charging control function, the advertisement storage, and the terminal without any manual intervention by a service provider. Compared with the prior art in which an advertisement storing process and a process of setting an advertisement in an administered server are completed by using a lot of manual labor resources and time resources, not only manual labor resources and time resources can be saved, but also advertisement insertion efficiency can be significantly improved.

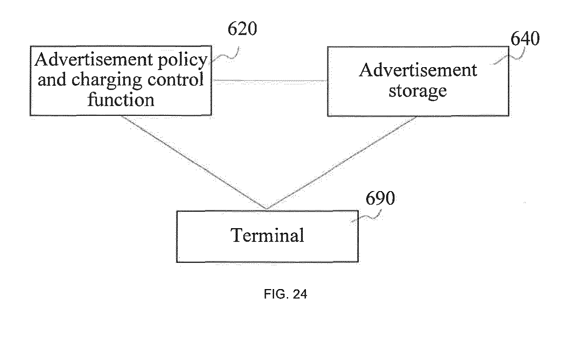

Referring to FIG. 24, FIG. 24 shows a structural block diagram of an advertisement insertion system provided by another embodiment of the present invention. The advertisement insertion system includes an advertisement policy and charging control function 620, an advertisement storage 640, and a terminal 690.

The advertisement policy and charging control function 620 may be an advertisement policy and charging control function provided by the embodiment corresponding to FIG. 11.

The advertisement storage 640 may be an advertisement storage provided by the embodiment corresponding to FIG. 13 or FIG. 14.

The terminal 680 may be a terminal provided by the embodiment corresponding to FIG. 19 or FIG. 20.

In summary, in the advertisement insertion system provided by this embodiment, processes of automatically receiving, storing, and inserting an advertisement can be achieved by the advertisement insertion system including the advertisement policy and charging control function, the advertisement storage, and the terminal without any manual intervention by a service provider. Compared with the prior art in which an advertisement storing process and a process of setting an advertisement in an administered server are completed by using a lot of manual labor resources and time resources, not only manual labor resources and time resources can be saved, but also advertisement insertion efficiency can be significantly improved.

A person of ordinary skill in the art should understand that, all of or a part of steps in the foregoing embodiments may be implemented by hardware, or may also be implemented by a program instructing relevant hardware. The program may be stored in a computer readable storage medium. The storage medium may be a read-only memory, a magnetic disk, or an optical disk, or the like.

It should be noted that the units included in the foregoing terminal and base station embodiments are divided merely according to logical functions, but the present invention is not limited to the foregoing division, as long as corresponding functions can be realized; moreover, specific names of the functional units are merely provided for the purpose of distinguishing the units from one another, but are not intended to limit the protection scope of the present invention.

The foregoing descriptions are merely exemplary specific implementation manners of the present invention, but are not intended to limit the protection scope of the present invention. Any variation or replacement figured out by a person skilled in the art within the technical scope disclosed in the embodiments of the present invention shall fall within the protection scope of the present invention. Therefore, the protection scope of the present invention shall be subject to the protection scope of the claims.

## Claims

1. An advertisement storage method, wherein the method comprises:
receiving identification information which is of advertisement content and is sent by an advertisement providing device;
receiving description information which is of the advertisement content and is sent by the advertisement providing device, wherein the description information of the advertisement content comprises at least size information of the advertisement content; and
if the description information of the advertisement content satisfies a preset condition, sending a space allocation indication carrying the identification information and the size information of the advertisement content to an advertisement storage, so that the advertisement storage allocates a corresponding storage space to the advertisement content according to the identification information and the size information of the advertisement content, and that the advertisement storage requests the advertisement content from the advertisement providing device according to the identification information of the advertisement content and stores the advertisement content in the storage space; or, if the description information of the advertisement content satisfies a preset condition, sending a space allocation indication carrying the identification information and the size information of the advertisement content to an advertisement storage, so that the advertisement storage allocates a corresponding storage space to the advertisement content according to the identification information and the size information of the advertisement content, generates identification information of the storage space, and sends the identification information of the storage space to the advertisement providing device, so as to receive the advertisement content pushed according to the identification information of the storage space by the advertisement providing device to the storage space, and store the advertisement content.

2. The method according to claim 1, wherein that the description information of the advertisement content satisfies a preset condition comprises that:
a value in the size information of the advertisement content is smaller than a preset threshold.

3. The method according to claim 1 or 2, wherein the description information of the advertisement content further comprises one or more items of type information, resolution information, encoding information, a language type, and placement requirement information of the advertisement content;
that the description information of the advertisement content satisfies a preset condition comprises one or more of the following situations:
a type in the type information of the advertisement content satisfies a preset type, wherein the preset type comprises one or more kinds of text, image, audio, and video;
resolution in the resolution information of the advertisement content is smaller than or equal to preset resolution;
an encoding rule in the encoding information of the advertisement content satisfies a preset encoding rule;
a language in the language information of the advertisement content satisfies a preset language; and
a placement requirement in the placement requirement information of the advertisement content satisfies a preset placement requirement.

4. The method according to any one of claims 1 to 3, wherein after the receiving identification information which is of advertisement content and is sent by an advertisement providing device, and before the receiving description information which is of the advertisement content and is sent by the advertisement providing device, the method further comprises:
sending a description information acquisition request to the advertisement providing device according to the identification information of the advertisement content, so as to trigger the advertisement providing device to send the description information of the advertisement content.

5. The method according to any one of claim 1 to 3, wherein after the sending a space allocation indication carrying the identification information and the size information of the advertisement content to an advertisement storage, the method further comprises:
receiving identification information of the storage space fed back by the advertisement storage;
storing the identification information of the storage space, and associating the identification information of the storage space with the identification information and the description information of the corresponding advertisement content;
or, storing the identification information of the storage space, associating the identification information of the storage space with the identification information and the description information of the corresponding advertisement content, and forwarding the identification information of the storage space to the advertisement providing device, so that the advertisement providing device pushes the advertisement content to the storage space according to the identification information of the storage space.

6. The method according to claim 5, wherein if the description information of the advertisement content comprises the placement requirement information of the advertisement content,
after the storing the identification information of the storage space, and associating the identification information of the storage space with the identification information and the description information of the corresponding advertisement content, the method further comprises:
sending, to an advertisement insertion device or a terminal, the placement requirement information of the advertisement content and the identification information of the storage space corresponding to the advertisement content.

7. The method according to claim 6, wherein before the sending, to a terminal, the placement requirement information of the advertisement content and the identification information of the storage space corresponding to the advertisement content, the method further comprises:
sending preset short information to the terminal, so that the terminal establishes an Internet connection after receiving the preset short information; and
receiving an information acquisition request sent by using the Internet connection by the terminal, wherein the information acquisition request is used for requesting the placement requirement information of the advertisement content and/or the identification information of the storage space corresponding to the advertisement content.

8. An advertisement storage method, wherein the method comprises:
receiving a space allocation indication carrying identification information and size information of advertisement content;
allocating a corresponding storage space to the advertisement content according to the identification information and the size information of the advertisement content; and
requesting the advertisement content from an advertisement providing device according to the identification information of the advertisement content, receiving the advertisement content and storing the advertisement content in the storage space; or, generating identification information of the storage space and providing the identification information of the storage space for an advertisement providing device, so that the advertisement providing device pushes the advertisement content to the storage space according to the identification information of the storage space; and receiving and storing the advertisement content.

9. The method according to claim 8, wherein after the requesting the advertisement content from an advertisement providing device according to the identification information of the advertisement content and storing the advertisement content in the storage space, the method further comprises:
generating identification information of the storage space, and sending the identification information of the storage space to an advertisement policy and charging control function, so that the advertisement policy and charging control function stores the identification information of the storage space, and associates the identification information of the storage space with the identification information and the description information of the corresponding advertisement content.

10. The method according to claim 8, wherein the generating identification information of the storage space and providing the identification information of the storage space for an advertisement providing device comprises:
generating identification information of the storage space, and sending the identification information of the storage space to an advertisement policy and charging control function, so that the advertisement policy and charging control function stores the identification information of the storage space, associates the identification information of the storage space with the identification information and the description information of the corresponding advertisement content, and forwards the identification information of the storage space to the advertisement providing device, so that the advertisement providing device pushes the advertisement content to the storage space according to the identification information of the storage space.

11. The method according to claim 9 or 10, wherein the method further comprises:
receiving the identification information of the storage space sent by an advertisement insertion device or a terminal; and
sending the advertisement content stored in the storage space to the advertisement insertion device or the terminal.

12. An advertisement insertion method, comprising:
receiving placement requirement information of advertisement content and identification information of a storage space corresponding to the advertisement content which are sent by an advertisement policy and charging control function, wherein the placement requirement information comprises one or more items of a matching keyword, a placement area, placement object information, a placement time segment, and a matching trigger event;
if attribute information of data to be fed back to a user satisfies one or more items of the matching keyword, the placement area, the placement object information, and the placement time segment in the placement requirement information, inserting the advertisement content into the data, wherein the advertisement content comprises advertisement content requested in advance or in real time from an advertisement storage according to the identification information of the storage space; and
if a trigger event collected by a terminal is the same as the matching trigger event in the placement requirement information, playing the advertisement content on a screen of the terminal.

13. The method according to claim 12, wherein the attribute information comprises one or more items of data acquisition time, a keyword, a source, a destination, and personal information of the user;
that the attribute information of data to be fed back to a user satisfies one or more items of the matching keyword, the placement area, the placement object information, and the placement time segment in the placement requirement information comprises one or more of the following situations:
the data acquisition time in the attribute information satisfies the placement time segment in the placement requirement information;
the keyword in the attribute information satisfies the matching keyword in the placement requirement information;
one or both of the source and the destination in the attribute information satisfy the placement area in the placement requirement information; and
the personal information of the user in the attribute information satisfies the placement object information in the placement requirement information.

14. The method according to claim 12 or 13, wherein before the inserting the advertisement content into the data if attribute information of data to be fed back to a user satisfies one or more items of the matching keyword, the placement area, the placement object information, and the placement time segment in the placement requirement information, the method further comprises:
acquiring data to be fed back to the user, wherein the data comprises at least one kind of text, picture, audio, and video; and
performing deep packet inspection on the data so as to obtain attribute information of the data.

15. The method according to any one of claims 12 to 14, wherein the matching trigger event comprises at least one kind of pressing a button, pressing a touchscreen, receiving a voice signal, opening an application, and failure of terminal access unlocking.

16. The method according to any one of claims 12 to 15, wherein before the playing the advertisement content on a screen of the terminal if a trigger event collected by a terminal is the same as the matching trigger event in the placement requirement information, the method further comprises:
collecting a trigger event generated by a user operation; and
the playing the advertisement content on a screen of the terminal correspondingly comprises:
playing the advertisement content on an entire or a partial area of the screen of the terminal in a manner of overlapping on or covering original display content.

17. The method according to any one of claims 12 to 16, wherein before the receiving placement requirement information of advertisement content and identification information of a storage space corresponding to the advertisement content which are sent by an advertisement policy and charging control function, the method further comprises:
receiving preset short information sent by the advertisement policy and charging control function; and
establishing an Internet connection according to the preset short information, so as to obtain, according to the Internet connection, the placement requirement information of the advertisement content, the identification information of the storage space corresponding to the advertisement content, and/or the advertisement content.

18. An advertisement policy and charging control function, comprising:
an advertisement identification receiving module, configured to receive identification information which is of advertisement content and is sent by an advertisement providing device;
a description information receiving module, configured to receive description information which is of the advertisement content and is sent by the advertisement providing device, wherein the description information of the advertisement content comprises at least size information of the advertisement content;
a preset condition determining module, configured to determine that the description information received by the description information receiving module satisfies a preset condition; and
an allocation indication sending module, configured to, if the preset condition determining module determines that the description information satisfies the preset condition, send, to an advertisement storage, a space allocation indication carrying the identification information which is of the advertisement content and is received by the advertisement identification receiving module and the size information which is of the advertisement content and is received by the description information receiving module, so that the advertisement storage allocates a corresponding storage space to the advertisement content according to the identification information and the size information of the advertisement content, and that the advertisement storage requests the advertisement content from the advertisement providing device according to the identification information of the advertisement content and stores the advertisement content in the storage space; or configured to, if the preset condition determining module determines that the description information satisfies the preset condition, send, to an advertisement storage, a space allocation indication carrying the identification information which is of the advertisement content and is received by the advertisement identification receiving module and the size information which is of the advertisement content and is received by the description information receiving module, so that the advertisement storage allocates a corresponding storage space to the advertisement content according to the identification information and the size information of the advertisement content, generates identification information of the storage space, and sends the identification information of the storage space to the advertisement providing device, so as to receive the advertisement content pushed according to the identification information of the storage space by the advertisement providing device to the storage space; and store the advertisement content.

19. The advertisement policy and charging control function according to claim 18, wherein the preset condition determining module is specifically configured to determine that a value in the size information which is of the advertisement content and is received by the description information receiving module is smaller than a preset threshold; and
the allocation indication sending module is specifically configured to, if the preset condition determining module determines that the value in the size information of the advertisement content is smaller than the preset threshold, send, to the advertisement storage, the space allocation indication carrying the identification information which is of the advertisement content and is received by the advertisement identification receiving module and the size information which is of the advertisement content and is received by the description information receiving module.

20. The advertisement policy and charging control function according to claim 18 or 19, wherein the description information receiving module is further configured to receive one or more items of type information, resolution information, encoding information, a language type, and placement requirement information in the advertisement content;
that the preset condition determining module determines that the description information of the advertisement content satisfies the preset condition specifically comprises one or more of the following situations:
determining that a type in the type information of the advertisement content satisfies a preset type, wherein the preset type comprises one or more kinds of text, image, audio, and video;
determining that resolution in the resolution information of the advertisement content is smaller than or equal to preset resolution;
determining that an encoding rule in the encoding information of the advertisement content satisfies a preset encoding rule;
determining that a language in the language information of the advertisement content satisfies a preset language; and
determining that a placement requirement in the placement requirement information of the advertisement content satisfies a preset placement requirement.

21. The advertisement policy and charging control function according to any one of claims 18 to 20, wherein the advertisement policy and charging control function further comprises:
an acquisition request sending module, configured to send a description information acquisition request to the advertisement providing device according to the identification information which is of the advertisement content and is received by the advertisement identification receiving module, so as to trigger the advertisement providing device to send the description information of the advertisement content.

22. The advertisement policy and charging control function according to claim 18 or 21, wherein the advertisement policy and charging control function further comprises:
a space identification receiving module and a space identification storing module; or, a space identification receiving module, a space identification storing module, and a space identification forwarding module, wherein
the space identification receiving module is configured to receive identification information of the storage space fed back by the advertisement storage;
the space identification storing module is configured to store the identification information of the storage space received by the space identification receiving module, and associate the identification information of the storage space received by the space identification receiving module with the identification information which is of the corresponding advertisement content and is received by the advertisement identification receiving module and the description information which is of the corresponding advertisement content and is received by the description information receiving module; and
the space identification forwarding module is configured to forward the identification information of the storage space received by the space identification receiving module to the advertisement providing device, so that the advertisement providing device pushes the advertisement content to the storage space according to the identification information of the storage space.

23. The advertisement policy and charging control function according to claim 22, wherein if the description information of the advertisement content comprises the placement requirement information of the advertisement content, the advertisement policy and charging control function further comprises:
an advertisement information sending module, configured to send, to an advertisement insertion device or a terminal, the placement requirement information which is of the advertisement content and is received by the description information receiving module and the identification information which is of the storage space corresponding to the advertisement content and is received by the space identification receiving module.

24. The advertisement policy and charging control function according to claim 23, wherein the advertisement policy and charging control function further comprises:
a preset short information sending module, configured to send preset short information to the terminal, so that the terminal establishes an Internet connection after receiving the preset short information; and
an information request receiving module, configured to, after the preset short information sending module sends the preset short information, receive an information acquisition request sent by using the Internet connection by the terminal, wherein the information acquisition request is used for requesting the placement requirement information of the advertisement content and/or the identification information of the storage space corresponding to the advertisement content.

25. An advertisement storage, comprising an allocation indication receiving module, a storage space allocating module, and one of an active advertisement acquiring module and a passive advertisement acquiring module, wherein
the allocation indication receiving module is configured to receive a space allocation indication carrying identification information and size information of advertisement content, wherein the space allocation indication is sent by an advertisement policy and charging control function when information comprised in description information of the advertisement content satisfies a preset condition, and the description information of the advertisement content comprises at least the size information of the advertisement content;
the storage space allocating module is configured to allocate a corresponding storage space to the advertisement content according to the identification information and the size information which are of the advertisement content and are received by the allocation indication receiving module;
the active advertisement acquiring module is configured to request the advertisement content from the advertisement providing device according to the identification information which is of the advertisement content and is received by the allocation indication receiving module, and receive the advertisement content and store the advertisement content in the storage space allocated by the storage space allocating module; and
the passive advertisement acquiring module is configured to generate identification information of the storage space allocated by the storage space allocating module and provide the identification information of the storage space to the advertisement providing device, so that the advertisement providing device pushes the advertisement content to the storage space according to the identification information of the storage space; and receive and store the advertisement content.

26. The advertisement storage according to claim 25, wherein the advertisement storage further comprises:
a space identification sending module, configured to generate identification information of the storage space allocated by the storage space allocating module, and send the identification information of the storage space to the advertisement policy and charging control function, so that the advertisement policy and charging control function stores the identification information of the storage space, and associates the identification information of the storage space with the identification information and the description information of the corresponding advertisement content.

27. The advertisement storage according to claim 25, wherein the passive advertisement acquiring module comprises:
a space identification sending unit, configured to generate identification information of the storage space allocated by the storage space allocating module, and send the identification information of the storage space to the advertisement policy and charging control function, so that the advertisement policy and charging control function stores the identification information of the storage space, and associates the identification information of the storage space with the identification information and the description information of the corresponding advertisement content, and forwards the identification information of the storage space to the advertisement providing device, so that the advertisement providing device pushes the advertisement content to the storage space according to the identification information of the storage space.

28. The advertisement storage according to any one of claims 25 to 27, wherein the advertisement storage further comprises:
an identification information receiving module, configured to receive the identification information of the storage space sent by an advertisement insertion device or a terminal; and
an advertisement content sending module, configured to send, to the advertisement insertion device or the terminal, the advertisement content stored in the storage space corresponding to the identification information received by the identification information receiving module.

29. An advertisement insertion device, used in a network element device via which a terminal accesses the Internet, comprising:
a placement requirement receiving module, configured to receive placement requirement information of advertisement content and identification information of a storage space corresponding to the advertisement content which are sent by an advertisement policy and charging control function, wherein the placement requirement information comprises one or more items of a matching keyword, a placement area, placement object information, and a placement time segment;
an attribute information determining module, configured to determine that attribute information of data to be fed back to a user satisfies one or more items of the matching keyword, the placement area, the placement object information, and the placement time segment in the placement requirement information received by the placement requirement receiving module; and
a data matching insertion module, configured to insert the advertisement content into the data after the attribute information determining module determines that the attribute information of the data to be fed back to the user satisfies one or more items of the matching keyword, the placement area, the placement object information, and the placement time segment in the placement requirement information received by the placement requirement receiving module, wherein the advertisement content is advertisement content requested in advance or in real time from an advertisement storage according to the identification information of the storage space received by the placement requirement receiving module.

30. The advertisement insertion device according to claim 29, wherein the attribute information comprises one or more items of data acquisition time, a keyword, a source, a destination, and personal information of the user;
that the attribute information determining module is configured to determine the attribute information of the data to be fed back to the user specifically comprises one or more of the following situations:
determining that the data acquisition time in the attribute information satisfies the placement time segment in the placement requirement information;
determining that the keyword in the attribute information satisfies the matching keyword in the placement requirement information;
determining that one or both of the source and the destination in the attribute information satisfy the placement area in the placement requirement information; and
determining that the personal information of the user in the attribute information satisfies the placement object information in the placement requirement information.

31. The advertisement insertion device according to claim 29 or 30, wherein the advertisement insertion device further comprises:
a data acquiring module and a data analyzing module, wherein
the data acquiring module is configured to acquire data to be fed back to a user, wherein the data comprises at least one kind of text, picture, audio, and video; and
the data analyzing module is configured to perform deep packet inspection on the data acquired by the data acquiring module so as to obtain attribute information of the data.

32. A terminal, comprising:
a placement requirement receiving module, configured to receive placement requirement information of advertisement content and identification information of a storage space corresponding to the advertisement content which are sent by an advertisement policy and charging control function, wherein the placement requirement information comprises one or more items of a matching keyword, a placement area, placement object information, and a placement time segment;
an attribute information determining module, configured to determine that attribute information of data to be fed back to a user satisfies one or more items of the matching keyword, the placement area, the placement object information, and the placement time segment in the placement requirement information received by the placement requirement receiving module; and
a data matching insertion module, configured to insert the advertisement content into the data after the attribute information determining module determines that the attribute information of the data to be fed back to the user satisfies one or more items of the matching keyword, the placement area, the placement object information, and the placement time segment in the placement requirement information received by the placement requirement receiving module, wherein the advertisement content is advertisement content requested in advance or in real time from an advertisement storage according to the identification information of the storage space received by the placement requirement receiving module.

33. The terminal according to claim 32, wherein the attribute information determined by the attribute information determining module comprises one or more items of data acquisition time, a keyword, a source, a destination, and personal information of the user;
that the attribute information determining module is configured to determine the attribute information of the data to be fed back to the user specifically comprises one or more of the following situations:
determining that the data acquisition time in the attribute information satisfies the placement time segment in the placement requirement information;
determining that the keyword in the attribute information satisfies the matching keyword in the placement requirement information;
determining that one or both of the source and the destination in the attribute information satisfy the placement area in the placement requirement information; and
determining that the personal information of the user in the attribute information satisfies the placement object information in the placement requirement information.

34. The terminal according to claim 32 or 33, wherein the terminal further comprises:
a data acquiring module and a data analyzing module, wherein
the data acquiring module is configured to acquire data to be fed back to a user, wherein the data comprises at least one kind of text, picture, audio, and video.
the data analyzing module is configured to perform deep packet inspection on the data acquired by the data acquiring module so as to obtain attribute information of the data.

35. The terminal according to any one of claims 32 to 34, wherein the terminal further comprises:
a short information receiving module, configured to receive preset short information sent by the advertisement policy and charging control function; and
a connection establishing module, configured to establish an Internet connection according to the preset short information received by the short information receiving module, so as to acquire, according to the Internet connection, the placement requirement information of the advertisement content, the identification information of the storage space corresponding to the advertisement content, and/or the advertisement content.

36. A terminal, comprising:
a placement requirement receiving module, configured to receive placement requirement information of advertisement content and identification information of a storage space corresponding to the advertisement content which are sent by an advertisement policy and charging control function, wherein the placement requirement information comprises a matching trigger event;
a trigger event determining module, configured to determine that a trigger event collected by a terminal is the same as the matching trigger event in the placement requirement information; and
a behavior matching insertion module, configured to play the advertisement content on a screen of the terminal after the trigger event determining module determines that the trigger event collected by the terminal is the same as the matching trigger event in the placement requirement information received by the placement requirement receiving module, wherein the advertisement content is advertisement content requested in advance or in real time from an advertisement storage according to the identification information of the storage space received by the placement requirement receiving module.

37. The terminal according to claim 36, wherein the trigger event determined by the trigger event determining module comprises at least one kind of pressing a button, pressing a touchscreen, receiving a voice signal, opening an application, and failure of terminal access unlocking.

38. The terminal according to claim 36 or 37, wherein the terminal further comprises:
a trigger event collecting module, configured to collect a trigger event generated by a user operation;
wherein the behavior matching insertion module is further specifically configured to, if the trigger event determining module determines that the trigger event collected by the terminal is the same as the matching trigger event in the placement requirement information, play the advertisement content on an entire or a partial area of the screen of the terminal in a manner of overlapping on or covering original display content.

39. The terminal according to any one of claims 36 to 38, wherein the terminal further comprises:
a short information receiving module, configured to receive preset short information sent by the advertisement policy and charging control function; and
a connection establishing module, configured to establish an Internet connection according to the preset short information received by the short information receiving module, so as to acquire, according to the Internet connection, the placement requirement information of the advertisement content, the identification information of the storage space corresponding to the advertisement content, and/or the advertisement content.

40. An advertisement storage system, comprising the advertisement policy and charging control function according to any one of claims 18 to 24, and the advertisement storage according to any one of claims 25 to 28.

41. An advertisement insertion system, comprising the advertisement policy and charging control function according to claim 23, the advertisement storage according to claim 28, and the advertisement insertion device according to any one of claims 29 to 31.

42. An advertisement insertion system, comprising the advertisement policy and charging control function according to claim 23 or 24, the advertisement storage according to claim 28, and the terminal according to any one of claims 32 to 35.

43. An advertisement insertion system, comprising the advertisement policy and charging control function according to claim 23 or 24, the advertisement storage according to claim 28, and the terminal according to any one of claims 36 to 39.
